# FASCICULE DE BREVET EUROPEEN

(11) **EP 0 429 382 B1**
(45) Date de publication et mention de la délivrance du brevet: **20.07.1994**
(21) Numéro de dépôt: 90440107.2
(22) Date de dépôt: 22.11.1990
(51) Int. Cl.: A01D 34/76, A01D 43/10

(54) **Faucheuse comportant un groupe d'organes de travail s'étendant au travail transversalement à la direction d'avance**
Mähmaschine mit einer sich quer zur Fahrtrichtung erstreckenden Arbeitswerkzeugeeinheit
Mower including a group of working elements extending crosswise to a direction of advance at work

(30) Priorité: 24.11.1989 FR 8915685
(43) Date de publication de la demande: 29.05.1991
(73) Titulaire: KUHN S.A., F-67700 Saverne (FR)
(72) Inventeur: Wattron, Bernard, F-67700 Haegen (FR); Helfer, Roland, F-67450 Lampertheim (FR)

(56) Documents cités:
- EP-A- 0 163 587
- EP-A- 0 184 533
- EP-A- 0 238 159
- EP-A- 0 245 186
- EP-A- 0 297 012
- EP-A- 0 322 327
- DE-A- 2 851 611
- FR-A- 2 608 362
- GB-A- 1 143 936

## Description

La présente invention concerne une faucheuse comportant un groupe d'organes de travail s'étendant, au travail, transversalement à la direction d'avance au travail, comprenant une structure porteuse à laquelle est liée une barre de coupe réalisée en deux parties de barre de coupe liées rigidement l'une à l'autre et munies chacune d'organes de coupe et d'éléments d'entraînement s'étendant au moins partiellement sous lesdits organes de coupe, ladite structure porteuse comportant au moins un organe porteur central lié à la barre de coupe, ledit groupe d'organes de travail comportant, en sus, des moyens d'entraînement qui s'étendent notamment au-dessus des extrémités adjacentes des deux parties de barre de coupe et qui reçoivent le mouvement d'une source motrice via des moyens de transmission, lesdits moyens d'entraînement comprenant deux organes d'entraînement comportant chacun un renvoi d'angle, le premier organe d'entraînement étant accouplé aux éléments d'entraînement de la première partie de barre de coupe et le deuxième organe d'entraînement étant accouplé aux éléments d'entraînement de la deuxième partie de barre de coupe, ledit groupe d'organes de travail étant, en sus, muni de moyens de liaison par l'intermédiaire desquels il est lié à une structure destinée à être attelée à un véhicule moteur.

Une telle faucheuse est connue par le document EP-A-0 322 327. Cette faucheuse comporte un groupe d'organes de travail (organes de coupe et rotors d'andainage, auxquels peuvent, le cas échéant, être adjoints des organes de traite-ment du produit coupé par les organes de coupe).

Ce groupe d'organes de travail s'étend, au travail, transversalement à la direction d'avance au travail. Il comprend notamment une structure porteuse à laquelle est liée une barre de coupe réalisée en deux tronçons de barre de coupe liés rigidement l'un à l'autre. Chaque tronçon de barre de coupe est muni d'organes de coupe et d'éléments d'entraînement s'étendant au moins partiellement sous les-dits organes de coupe.

La structure porteuse comporte deux organes porteurs extérieurs qui s'étendent chacun près d'une extrémité de la barre de coupe, ainsi qu'un organe porteur central implanté dans la partie médiane de la barre de coupe. C'est par l'intermédiaire de ces organes porteurs extérieurs et de cet organe porteur central que la barre de coupe est liée à la structure porteuse. Cette dernière comporte aussi un carter central, deux carters extérieurs et deux tubes entretoises fixés chacun entre le carter central et le carter extérieur respectif. Le carter central s'étend au-dessus de la partie médiane de la barre de coupe, c'est-à-dire au-dessus des extrémités adjacentes des deux tronçons de barre de coupe, tandis que chaque carter extérieur s'étend au-dessus de l'extrémité extérieure respective de la barre de coupe. L'organe porteur central est lié au carter central, tandis que chaque organe porteur extérieur est lié au carter extérieur respectif.

Le carter central comporte un arbre d'entrée, un couple de roues dentées coniques et un arbre de distribution. L'arbre d'entrée est lié en rotation à l'arbre de distribution via ledit couple de roues dentées coniques. Les deux extrémités de l'arbre de distribution sortent du carter central et pénètrent chacune dans le tube entretoise respectif. A chaque extrémité, l'arbre de distribution est accouplé à une extrémité d'un arbre de transmission qui s'étend à l'intérieur du tube entretoise respectif et qui est accouplé, à son autre extrémité, à l'arbre d'entrée du carter extérieur respectif. A l'intérieur de chaque carter extérieur, l'arbre d'entrée est lié en rotation à une roue dentée conique qui engrène avec une roue dentée conique liée en rotation à l'extrémité supérieure d'un arbre d'entraînement. Cet arbre d'entraînement est colinéaire avec l'axe de rotation de l'organe de coupe et du rotor d'andainage respectifs s'étendant sous le carter extérieur respectif. Cet arbre d'entraînement entraîne en rotation ledit organe de coupe et ledit rotor d'andainage, ainsi que des organes d'entraînement logés dans le tronçon de barre de coupe respectif et servant à entraîner en rotation les organes de coupe suivants dudit tronçon de barre de coupe, ainsi que le deuxième rotor d'andainage correspondant.

Le groupe d'organes de travail ainsi formé, est prévu pour être lié à une structure destinée à être attelée à un véhicule moteur. Bien que cela ne soit ni représenté, ni décrit, le groupe d'organes de travail de cette faucheuse connue est donc forcément muni de moyens de liaison par l'intermédiaire desquels il est lié à ladite structure.

Dans cette faucheuse connue, l'organe porteur central est destiné à diminuer substantiellement la flèche de la barre de coupe apparaissant notamment sous l'effet des efforts extérieurs qui agissent sur ladite barre de coupe. La partie médiane du groupe d'organes de travail de cette faucheuse connue est donc certes rigidifiée. Toutefois, cette rigidité reste limitée et peut, dans certains cas, s'avérer insuffisante pour pouvoir lier, de manière fiable, le groupe d'organes de travail à la structure destinée à être attelée à un véhicule moteur.

L'entraînement des organes de coupe de cette faucheuse connue n'est pas non plus réalisé de manière économique et fiable. En effet, le mouvement disponible dans le carter central est transmis aux carters extérieurs, pour ensuite revenir vers la partie médiane de la barre de coupe. Du reste, toute la puissance nécessaire pour entraîner les organes de coupe d'un tronçon de barre de coupe, passe par l'arbre de transmission respectif logé à l'intérieur du tube entretoise correspondant de la structure porteuse.

Par le document EP-A-0 297 012, il est connu une autre faucheuse comportant un groupe d'organes de travail (organes de coupe, rotors d'andainage et organes d'andainage). Ce groupe d'organes de travail s'étend, au travail, transversalement à la direction d'avance au travail. Il comprend notamment une structure porteuse à laquelle est liée une barre de coupe réalisée en deux parties de barre de coupe liées rigidement l'une à l'autre. Chaque partie de barre de coupe est munie d'organes de coupe et d'éléments d'entraînement s'étendant au moins partiellement sous lesdits organes de coupe.

La structure porteuse comporte une paroi latérale derrière chaque extrémité extérieure de la barre de coupe, cette paroi latérale étant liée à la barre de coupe au moyen d'un pied. La structure porteuse comporte, en sus, un tube entretoise qui lie les deux parois latérales entre elles. La structure porteuse comporte enfin encore deux carters de renvoi dont chacun est fixé sur la partie frontale supérieure de la paroi latérale correspondante, de sorte à s'étendre au-dessus de l'organe de coupe situé à l'extrémité extérieure de la partie de barre de coupe correspondante.

Chaque carter de renvoi comporte un arbre d'entrée qui s'étend transversalement à la direction d'avance au travail et est dirigé vers la partie médiane de la barre de coupe. A l'intérieur du carter de renvoi, l'arbre d'entrée est accouplé, au moyen d'un couple de roues dentées coniques, à un arbre dirigé vers le bas. Cet arbre traverse le rotor d'andainage aménagé au-dessus de l'organe de coupe correspondant et est destiné à entraîner en rotation ledit organe de coupe et ledit rotor d'andainage correspondant, ainsi que les organes d'entraînement logés dans la partie de barre de coupe correspondante et prévus pour la mise en mouvement des organes de coupe suivants de ladite partie de barre de coupe.

Le groupe d'organes de travail ainsi formé, est lié à une structure destinée à être attelée à un véhicule moteur et qui s'appuie sur le sol au moyen de deux roues. La liaison du groupe d'organes de travail à ladite structure est réalisée par un dispositif à quadrilatère déformable qui comprend deux ensembles implantés chacun à une extrémité correspondante du groupe d'organes de travail et prévus de telle manière que la structure tire le groupe d'organes de travail.

Cette structure comporte un carter d'entrée présentant une partie inférieure destinée à distributer aux carters de renvoi le mouvement de rotation disponible à son arbre d'entrée. A l'intérieur de la partie inférieure du carter d'entrée, l'arbre d'entrée est accouplé à un arbre de sortie par un couple de roues dentées coniques. Les deux extrémités de l'arbre de sortie sortent de la partie inférieure du carter d'entrée au moins sensiblement parallèlement aux arbres d'entrée des carters de renvoi. Le mouvement disponible à l'arbre de sortie de la partie inférieure du carter d'entrée est ensuite distribué aux deux parties de barre de coupe par un arbre de distribution respectif à joints universels liant l'arbre d'entrée du carter de renvoi respectif à l'extrémité correspondante de l'arbre de sortie de la partie inférieure du carter d'entrée.

Dans cette faucheuse connue, il n'est pas prévu d'organe porteur central.

L'entraînement des organes de coupe n'est pas non plus réalisé de manière simple. Les deux arbres de distribution à joints universels nécessitent, compte tenu du milieu dans lequel ils travaillent, un entretien permanent.

Du reste, l'espace prévu pour le passage du produit coupé par les organes de coupe, peut se réduire durant le travail. En effet, lorsque le groupe d'organes de travail se déplace vers le haut pendant le travail, la partie inférieure du carter d'entrée et l'extrémité des arbres de distribution branchée sur ladite partie inférieure pénètrent dans ledit espace. Ceci peut entraîner une gêne pour le bon écoulement du produit coupé et occasionner des bourrages.

Etant donné enfin que le groupe d'organes de travail est lié à la structure destinée à être attelée à un véhicule moteur, par deux ensembles définissant un quadrilatère déformable, qui s'étendent à une extrémité respective du groupe d'organes de travail, ladite structure doit avoir une dimension adéquate permettant ladite liaison. Une telle structure peut devenir lourde et onéreuse.

Par le document FR-A-2 608 362, il est connu une faucheuse-conditionneuse traînée comportant un groupe d'organes de travail (organes de coupe et organes de conditionnement). Ce groupe d'organes de travail s'étend, au travail, transversalement à la direction d'avance au travail. Il est en fait formé par deux mécanismes de coupe et de conditionnement liés l'un à l'autre.

Chaque mécanisme de coupe et de conditionnement est muni d'organes de coupe et d'organes de conditionnement. Les organes de coupe sont regroupés sur une barre de coupe qui est liée à une structure porteuse. Celle-ci comporte deux organes porteurs qui supportent la barre de coupe en pénétrant chacun dans un rotor correspondant de la barre de coupe. Chaque mécanisme de coupe et de conditionnement comporte aussi un moteur hydraulique s'étendant au-dessus de son extrémité qui est adjacente à l'autre mécanisme de coupe et de conditionnement. Ce moteur hydraulique est destiné à la mise en mouvement des organes de coupe et, le cas échéant, des organes de conditionnement du mécanisme de coupe et de conditionnement correspondant. Les deux moteurs hydrauliques sont accouplés l'un à l'autre au moyen d'un arbre télescopique à joints universels, de sorte que le mouvement de rotation des organes de travail de l'un des mécanismes de coupe et de conditionnement soit synchrone avec le mouvement de rotation des organes de travail de l'autre mécanisme de coupe et de conditionnement.

Les deux mécanismes de coupe et de conditionnement sont liés l'un à l'autre, d'une part, par une rotule d'accouplement s'étendant, en partie au moins, sous le plan de coupe des organes de coupe et, d'autre part, par une structure porteuse commune. Cette structure porteuse commune est constituée par une poutre s'étendant plus haut que les mécanismes de coupe et de conditionnement. Chaque mécanisme de coupe et de conditionnement est lié à une extrémité correspondante de ladite poutre au moyen d'une chape de guidage qui permet au mécanisme de coupe et de conditionnement, d'une part, de pivoter autour d'un axe s'étendant sensiblement suivant la direction d'avance au travail et, d'autre part, de se déplacer transversalement à ladite direction d'avance au travail.

Le groupe d'organes de travail, ainsi formé, comporte des chapes servant à l'accrochage de bielles formant un parallélogramme déformable et par l'intermédiaire desquelles ledit groupe d'organes de travail est suspendu dans une structure destinée à être attelée à un véhicule moteur. Cette structure comporte un châssis et un timon. Ce châssis s'étend transversalement à la direction d'avance au travail et a, en vue de dessus, une forme de losange dont le grand axe s'étend transversalement à la direction au travail et le petit axe s'étend suivant la direction d'avance au travail. A chacune de ses extrémités, ce châssis est muni d'une roue. C'est par l'intermédiaire de ces roues qu'il s'appuie et roule sur le sol.

La structure porteuse du groupe d'organes de travail de cette faucheuse connue est, du fait que les deux mécanismes de coupe et de conditionnement possèdent un certain nombre de degrés de liberté l'un par rapport à l'autre, relativement complexe et, en conséquence, relativement onéreuse. Par ailleurs, ces nombreuses liaisons diminuent le degré de fiabilité de la faucheuse, car certaines d'entre elles peuvent prendre un jeu intolérable après un certain temps de travail, alors que d'autres peuvent gripper.

Il s'avère aussi que le dispositif de suspension liant le groupe d'organes de travail au châssis, nécessite un châssis d'une dimension relativement importante, qui alourdit et renchérit la faucheuse.

En ce qui concerne enfin les moyens d'entraînement du groupe d'organes de travail, ceux-ci ne sont pas non plus satisfaisants.

La présente invention a pour objectif de créer une faucheuse ayant un groupe d'organes de travail
- dont la partie médiane est très rigide, de sorte que ledit groupe d'organes de travail puisse être lié de manière fiable à la structure servant notamment à le déplacer durant le travail, et
- dont les moyens d'entraînement soient simples, économiques et fiables.

A cet effet, la faucheuse selon la présente invention est caractérisée par le fait que :
a) la structure porteuse comporte deux organes porteurs centraux dont le premier est lié à la première partie de barre de coupe et dont le deuxième est lié à la deuxième partie de barre de coupe ;
b) le premier organe d'entraînement s'étend au-dessus de l'extrémité intérieure de la première partie de barre de coupe où il est accouplé aux éléments d'entraînement de cette première partie de barre de coupe et le deuxième organe d'entraînement s'étend au-dessus de l'extrémité intérieure de la deuxième partie de barre de coupe où il est accouplé aux éléments d'entraînement de cette deuxième partie de barre de coupe ;
c) chaque organe porteur central est lié rigidement au carter de renvoi d'angle de l'organe d'entraînement correspondant ;
d) les deux organes porteurs centraux sont directement et/ou indirectement liés rigidement entre-eux ; et
e) une partie desdits moyens de liaison est prévue sur la liaison rigide directe et/ou indirecte entre les deux organes porteurs centraux.

Dans la faucheuse de l'invention, la partie médiane du groupe d'organes de travail est très rigide et comporte des moyens de liaison qui permettent de lier de manière fiable ledit groupe d'organes de travail à la structure destinée à être attelée à un véhicule moteur pour déplacer ledit groupe d'organes de travail.

Comme des moyens de liaison qui permettent de lier le groupe d'organes de travail à la structure prévue pour déplacer celui-ci notamment pendant le travail, ont pu être implantés dans la partie médiane du groupe d'organes de travail, la forme de ladite structure a pu être également simplifiée.

L'entraînement enfin a été simplifié pour le rendre à la fois économique et fiable, en ne nécessitant qu'un entretien réduit.

Selon une caractéristique supplémentaire, il pourra être prévu que les deux parties de barre de coupe soient, à leurs extrémités adjacentes, surmontées chacune d'un rotor tournant autour d'un axe dirigé vers le haut. Ces deux axes de rotation sont d'ailleurs au moins sensiblement parallèles.

Dans ce cas, il pourra également être prévu, selon une autre caractéristique supplémentaire, que le premier organe porteur central pénètre dans le rotor correspondant de la première partie de barre de coupe en traversant la partie supérieure de celui-ci, et que le deuxième organe porteur central pénètre dans le rotor correspondant de la deuxième partie de barre de coupe en traversant également la partie supérieure de celui-ci.

Il pourra aussi être avantageusement prévu que chaque organe porteur central soit lié de manière démontable au carter de renvoi d'angle correspondant.

Selon une autre caractéristique supplémentaire, il peut également être prévu que les deux parties de barre de coupe soient, en sus, directement accouplées l'une à l'autre au moyen d'un élément d'accouplement s'étendant, en partie au moins, sous le plan de coupe des organes de coupe. La rigidité de la liaison entre les deux parties de barre de coupe s'en trouvera renforcée.

Ce renforcement peut d'ailleurs encore être amélioré en prévoyant que l'élément d'accouplement accouple les deux parties de barre de coupe rigidement entre elles.

La liaison directe entre les deux organes porteurs centraux peut être réalisée au moyen d'une traverse.

La liaison indirecte entre les deux organes porteurs centraux pourra, quant à elle, être réalisée au niveau des deux carters de renvoi d'angle qui seront alors liés rigidement entre eux. Cette liaison rigide entre les deux carters de renvoi d'angle pourra bien entendu être faite en sus de la liaison directe entre les deux organes porteurs centraux.

Avantageusement, cette traverse et/ou les deux carters de renvoi d'angle, liés rigidement entre eux, seront munis de moyens de liaison permettant l'accrochage du groupe d'organes de travail à la structure servant, notamment au travail, à déplacer ledit groupe d'organes de travail.

Dans un mode préférentiel de réalisation, chaque organe porteur central comporte notamment un fût, tandis que les éléments d'entraînement de la partie de barre de coupe correspondante comportent un arbre d'entraînement tournant autour d'un axe dirigé vers le haut et entraîné en rotation par le renvoi d'angle correspondant. Cet arbre d'entraînement est guidé en rotation dans ledit fût et, de surcroît, lié en translation à celui-ci, de telle sorte que ladite partie de barre de coupe soit liée audit fût par l'intermédiaire dudit arbre d'entraînement.

Ce fût sera d'ailleurs avantageusement lié de manière amovible au carter du renvoi d'angle correspondant.

Lorsque les deux fûts sont directement liés entre eux au moyen d'une traverse, celle-ci sera avantageusement prévue au-dessus des deux rotors correspondants.

Selon une caractéristique supplémentaire de l'invention, chaque carter de renvoi d'angle pourra comporter un arbre d'entrée s'étendant dans un plan au moins sensiblement horizontal et les deux arbres d'entrée seront au moins sensiblement dirigés l'un vers l'autre. Il pourra, en sus, être prévu que les moyens d'entraînement comportent un carter de renvoi d'angle de distribution s'étendant au moins partiellement entre les deux carters de renvoi d'angle et transmettant le mouvement auxdits arbres d'entrée.

Lorsqu'il est prévu que les deux carters de renvoi d'angle soient liés rigidement entre eux, cette liaison rigide pourra être avantageusement réalisée au moyen du carter de renvoi d'angle de distribution.

Préférentiellement d'ailleurs, les carters de renvoi d'angle et le carter de renvoi d'angle de distribution formeront un carter d'entrée unique réalisée en une seule pièce. Ceci confère à cet ensemble une rigidité remarquable.

Selon une caractéristique supplémentaire de l'invention, il pourra être prévu que l'arbre d'entrée du carter de renvoi d'angle de distribution soit dirigé, compte tenu du sens d'avance au travail, vers l'arrière.

Selon une caractéristique supplémentaire de l'invention, il pourra par ailleurs être prévu que la structure à laquelle est lié le groupe d'organes de travail, comporte un châssis et un dispositif de suspension lié notamment aux moyens de liaison du groupe d'organes de travail et destiné à suspendre le groupe d'organes de travail dans ledit châssis de manière que ledit groupe d'organes de travail puisse se déplacer, notamment en hauteur, par rapport audit châssis.

Selon une autre caractéristique supplémentaire, il pourra également être prévu que la structure à laquelle est lié le groupe d'organes de travail, comporte un châssis s'appuyant sur le sol au moyen de roues, et un timon lié audit châssis au moyen d'une liaison pivot d'axe dirigé vers le haut.

Cette liaison pivot pourra être avantageusement disposée au moins sensiblement dans la partie médiane dudit châssis considéré transversalement à la direction d'avance au travail.

Elle pourra, du reste, être réalisée par un moyeu prévu à l'extrémité arrière du timon et qui pourra être guidé en rotation dans un palier solidaire du châssis.

Selon une caractéristique supplémentaire, les moyens de transmission pourront comporter notamment un carter intermédiaire comportant une partie liée au timon et dont l'arbre de sortie a un axe de rotation au moins sensiblement confondu avec l'axe de la liaison pivot liant le timon au châssis.

Ce carter intermédiaire pourra comporter une autre partie liée au châssis et il sera prévu que les deux parties puissent tourner l'une par rapport à l'autre autour de l'axe de la liaison pivot liant le timon au châssis.

Dans ce cas, la deuxième partie du carter intermédiaire pourra comporter un arbre d'entrée dont l'axe de rotation sera également au moins sensiblement confondu avec l'axe de la liaison pivot, et il pourra être avantageusement prévu que l'arbre de sortie de la première partie et l'arbre d'entrée de la deuxième partie soient accouplés l'un à l'autre au moyen d'un accouplement.

D'éventuels défauts de positionnement de la première partie par rapport à la deuxième partie peuvent ainsi être admis sans introduire de sollicitations néfastes dans les moyens de transmission.

Préférentiellement, cet accouplement sera constitué d'un joint universel.

Préférentiellement également, il sera prévu que la première partie liée au timon, s'étende au-dessus de la deuxième partie liée au châssis.

Selon une caractéristique supplémentaire, les moyens de transmission pourront comporter, en sus, un arbre de transmission télescopique à joints universels transmettant le mouvement depuis l'arbre de sortie de la deuxième partie du carter intermédiaire jusqu'à l'arbre d'entrée du carter de renvoi d'angle de distribution.

Avec ces caractéristiques, le timon pourra occuper facilement plusieurs positions de travail et le groupe d'organes de travail pourra se déplacer par rapport au châssis sans que les moyens de transmission ne subissent de sollicitations supplémentaires.

Selon une caractéristique supplémentaire, ledit arbre de transmission télescopique à joints universels pourra s'étendre, en vue de dessus, au moins sensiblement suivant la direction d'avance au travail.

Dans une réalisation, il pourra être prévu que l'arbre de sortie de la deuxième partie du carter intermédiaire s'étende, compte tenu du sens d'avance au travail, derrière l'arbre d'entrée du carter de renvoi d'angle de distribution.

Il pourra également être avantageusement prévu que l'arbre de sortie de la deuxième partie du carter intermédiaire et l'arbre d'entrée du carter de renvoi d'angle de distribution soient au moins sensiblement parallèles à la direction d'avance au travail.

En travail normal, du reste, il pourra aussi être avantageusement prévu que l'arbre d'entrée du carter de renvoi d'angle de distribution et l'arbre de sortie de la deuxième partie du carter intermédiaire s'étendent au moins sensiblement à la même hauteur par rapport au sol.

Selon une caractéristique supplémentaire de l'invention, les deux parties de barre de coupe pourront former entre elles, en vue de dessus, un angle obtus inférieur à 180° et ouvert vers l'arrière. Grâce à cette disposition, il est possible de confectionner, dans le sillage de la faucheuse, un andain de produit coupé de largeur plus réduite que la largeur de coupe et ceci bien que le groupe d'organes de travail comporte deux parties de barre de coupe.

Dans ce cas notamment, il pourra être avantageusement prévu que le carter de renvoi d'angle de distribution comporte une roue dentée conique transmettant le mouvement directement à l'arbre d'entrée de l'un des carters de renvoi d'angle, et que les arbres d'entrée des deux carters de renvoi d'angle soient accouplés au moyen d'un accouplement.

Dans une réalisation avantageuse, cet accouplement pourra comporter deux joints universels s'étendant au moins sensiblement symétriquement de part et d'autre d'un plan vertical dirigé suivant la direction d'avance au travail et passant par le sommet de l'angle obtus formé par les deux arbres d'entrée, c'est-à-dire les deux parties de barre de coupe.

Selon une caractéristique supplémentaire, il pourra être prévu que la structure porteuse comporte, en sus, pour chaque partie de barre de coupe, d'une part un organe porteur extérieur lié à la partie de barre de coupe correspondante dans le voisinage de l'extrémité extérieure de celle-ci et, d'autre part, un tube porteur lié rigidement à l'une de ses extrémités au carter de renvoi d'angle correspondant et lié, près de l'autre de ses extrémités, audit organe porteur extérieur.

Avantageusement, chaque partie de barre de coupe pourra, à son extrémité extérieure, être surmontée d'un rotor tournant également autour d'un axe dirigé vers le haut. Cet axe de rotation est d'ailleurs au moins sensiblement parallèle à l'axe de rotation du rotor prévu à l'autre extrémité de la partie de la barre de coupe correspondante.

Dans ce cas, il sera prévu, de manière préférentielle, que chaque organe porteur extérieur pénètre dans le rotor extérieur correspondant en traversant la partie supérieure de celui-ci.

Dans un mode préférentiel de réalisation, il sera également prévu que chaque organe porteur extérieur comporte notamment un fût, tandis que les éléments d'entraînement de la partie de barre de coupe correspondante comportent un arbre tournant autour d'un axe dirigé vers le haut, en vue, notamment, de l'entraînement en rotation du rotor extérieur correspondant. Cet arbre est guidé en rotation dans ledit fût et, de surcroît, lié en translation à celui-ci, de telle sorte que ladite partie de barre de coupe soit liée au fût par l'intermédiaire de cet arbre.

Avantageusement, il pourra également être prévu que l'un au moins des tubes porteurs soit muni de moyens de liaison permettant l'accrochage du groupe d'organes de travail à la structure servant, notamment au travail, à déplacer ledit groupe d'organes de travail.

Selon une caractéristique supplémentaire, il pourra également être prévu que le carter de renvoi d'angle d'au moins une partie de barre de coupe comporte un arbre de sortie, et, qu'à l'intérieur du tube porteur correspondant, soit guidé en rotation un arbre de transmission accouplé, à son extrémité proche du carter de renvoi d'angle, à l'arbre de sortie de celui-ci et sortant, à son extrémité, de l'extrémité extérieure dudit tube porteur.

Si le groupe d'organes de travail comporte, en sus, derrière les organes de coupe, des organes de traitement du produit coupé par les organes de coupe, lesdits organes de traitement seront alors entraînés par ledit (lesdits) arbre(s) de transmission.

Dans une réalisation particulièrement avantageuse, il pourra être prévu qu'à chaque partie de barre de coupe soit associée une partie d'organes de traitement. Dans chaque tube porteur, il sera alors également prévu un arbre de transmission destiné à entraîner la partie d'organes de traitement correspondante.

Dans ce cas, il sera par ailleurs également avantageusement prévu que l'arbre de transmission liant l'arbre de sortie de la deuxième partie du carter intermédiaire à l'arbre d'entrée du carter de renvoi d'angle de distribution, s'étende entre les deux parties d'organes de traitement du produit coupé par les organes de coupe. Ces organes de traitement pourront être des organes de conditionnement dudit produit.

D'autres caractéristiques de l'invention apparaissent dans les autres sous-revendications, ainsi que dans la description suivante d'un exemple non limitatif de réalisation de l'invention, faite en référence au dessin annexé sur lequel :
- la figure 1 représente une vue de dessus d'une faucheuse selon l'invention attelée à un tracteur agricole ;
- la figure 2 représente une vue latérale du corps de ladite faucheuse ;
- la figure 3 représente une coupe partielle suivant le plan III-III défini sur la figure 2 ;
- la figure 4 représente une vue de dessus de l'élément d'accouplement liant les deux parties de barre de coupe directement entre elles ; et
- la figure 5 représente une vue en coupe, suivant le plan V-V défini sur la figure 3, du carter d'entrée du groupe d'organes de travail.

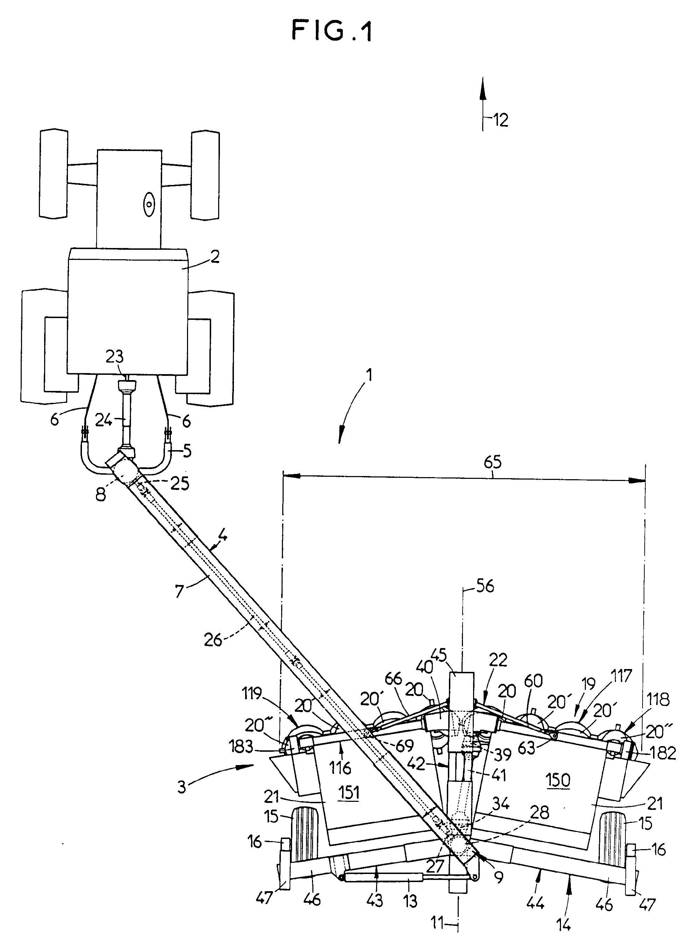

La figure 1 montre une faucheuse (1) selon l'invention, attelée à un tracteur agricole (2).

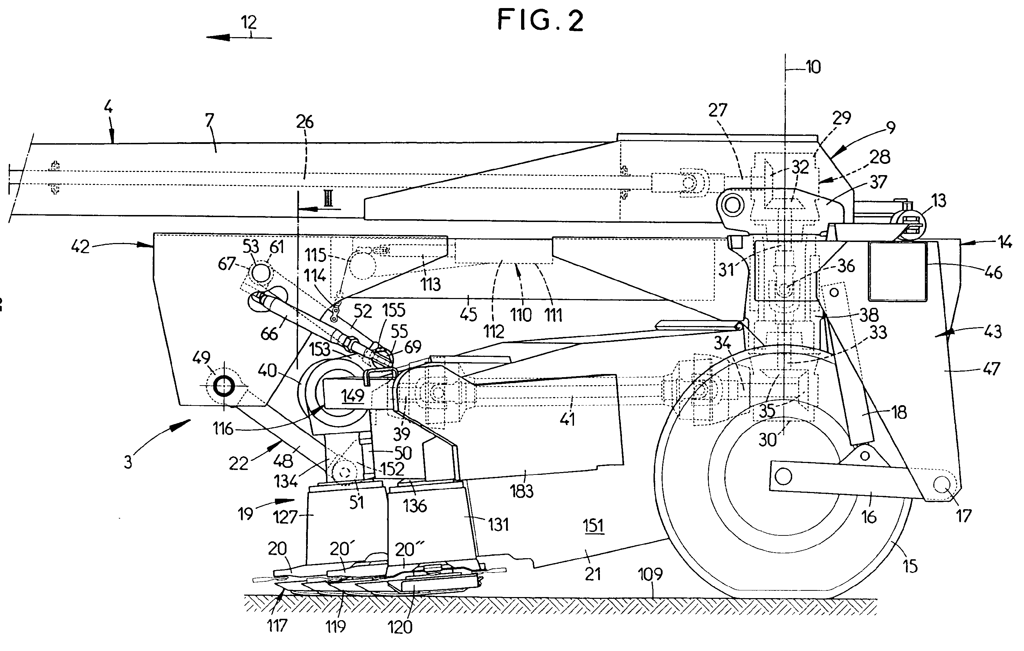

Elle se compose d'un corps (3) et d'un timon (4). Le timon (4), quant à lui, se compose d'un timon primaire (5) destiné à être attelé aux bras inférieurs (6) de l'attelage arrière du tracteur agricole (2), et d'un timon secondaire (7) lié au corps (3) de la faucheuse (1). Le timon primaire (5) est lié à l'extrémité frontale du timon secondaire (7) au moyen d'un dispositif de liaison (8) connu de l'homme de l'art et qui autorise notamment un pivotement du timon primaire (5) par rapport au timon secondaire (7) autour d'un axe au moins sensiblement vertical. Près de son extrémité arrière, le timon secondaire (7) est lié au corps (3) au moyen d'une liaison pivot (9) d'axe géométrique (10) (figure 2) au moins sensiblement vertical et s'étendant au moins sensiblement dans le plan vertical médian (11) du corps (3), dirigé suivant la direction d'avance (12) au travail. La position angulaire du timon (4) par rapport au corps (3) peut être modifié en faisant pivoter le timon (4) autour de l'axe (10) de la liaison pivot (9). La mise dans la position angulaire souhaitée et le maintien dans celle-ci sont réalisés par un vérin hydraulique (13). Grâce à cet agencement, le corps (3) de la faucheuse (1) peut, notamment au travail, s'étendre -vu de l'arrière dans la direction d'avance (12) au travail- soit à droite, soit à gauche du tracteur agricole (2). Ceci autorise le fauchage en aller et retour.

Le corps (3) de la faucheuse (1) comporte un châssis (14) qui s'appuie sur le sol -notamment au travail- au moyen de deux roues (15) qui s'étendent chacune près d'une extrémité extérieure respective dudit châssis (14). Chaque roue (15) est liée au châssis (14) au moyen d'un bras de roue (16). Celui-ci est lié audit châssis (14) au moyen d'une liaison pivot (17) d'axe géométrique au moins sensiblement horizontal et dirigé au moins sensiblement perpendiculairement à la direction d'avance (12) au travail. Les axes géométriques des liaisons pivot (17) des deux bras de roues (16) sont au moins sensiblement confondus. Entre chaque bras de roue (16) et le châssis (14) est par ailleurs prévu un vérin hydraulique (18) qui permet de faire pivoter le bras de roue (16) et la roue (15) correspondante par rapport au châssis (14) autour de l'axe géométrique de la liaison pivot (17) correspondante. Ceci permet au châssis (14) d'être approché du sol (109) pendant la phase de fauchage et d'être éloigné du sol (109) lorsque le fauchage est interrompu.

Le corps (3) de la faucheuse (1) comporte, par ailleurs, un groupe d'organes de travail (19) muni d'organes de coupe (20, 20′, 20˝) et d'organes de traitement (21) du produit coupé par les organes de coupe (20, 20′, 20˝), tels que des organes de conditionnement par exemple. Ce groupe d'organes de travail (19) est lié au châssis (14) au moyen d'un dispositif de suspension (22).

L'entrainement du groupe d'organes de travail (19) est réalisé à partir de la prise de force (23) du tracteur (2), qui attaque, par l'intermédiaire d'un arbre télescopique à joints universels (24), l'arbre d'entrée (non représenté) du dispositif de liaison (8) lequel est également d'une manière connue de l'homme de l'art, un dispositif de transmission du mouvement. L'arbre de sortie (25) du dispositif de liaison et de transmission (8) transmet le mouvement à un arbre de transmission (26) qui est logé à l'intérieur du timon secondaire (7). L'arbre de transmission (26) est accouplé à l'arbre d'entrée (27) d'un carter intermédiaire (28) qui s'étend au niveau de la liaison du timon secondaire (7) au châssis (14). Ce carter intermédiaire (28) (figure 2) se compose de deux parties : une partie supérieure (29) solidaire du timon secondaire (7) et une partie inférieure (30) solidaire du châssis (14). La partie supérieure (29) supporte, d'une part, l'arbre d'entrée (27) et, d'autre part, un arbre de sortie intermédiaire (31). Ces deux arbres (27, 31) sont accouplés au moyen d'un couple de roues dentées coniques (32) logé dans la partie supérieure (29). La partie inférieure (30), quant à elle, supporte, d'une part, un arbre d'entrée intermédiaire (33) et, d'autre part, un arbre de sortie (34). Les deux arbres (33, 34) sont accouplés au moyen d'un couple de roues dentées coniques (35) logé dans la partie inférieure (30). Par ailleurs, l'arbre de sortie intermédiaire (31) et l'arbre d'entrée intermédiaire (33) sont accouplés au moyen d'un joint universel (36). Enfin, ces deux arbres intermédiaires (31, 33) sont agencés de telle manière que leurs axes de rotation respectifs soient confondus avec l'axe géométrique (10) de la liaison pivot (9) par l'intermédiaire de laquelle le timon (4) est lié au châssis (14) du corps (3).

Cette liaison pivot (9) est réalisée de la manière suivante. A son extrémité arrière, le timon secondaire (7) est muni d'un moyeu (37) centré sur l'axe géométrique (10) et s'étendant vers le bas. Ce moyeu (37) est guidé en rotation dans un palier (38) également centré sur l'axe géométrique (10) et solidaire du châssis (14). Le guidage en rotation du moyeu (37) dans le palier (38), de même que la liaison axiale dudit moyeu (37) et dudit palier (38) n'ont pas été détaillés, car ceux-ci sont à la portée de l'homme de l'art.

L'arbre de sortie (34) de la partie inférieure (30) du carter intermédiaire (28), laquelle s'étend, compte tenu du sens d'avance (12) au travail, derrière le carter d'entrée (40) du groupe d'organes de travail (19), attaque l'arbre d'entrée (39) dudit carter d'entrée (40) au moyen d'un arbre de transmission télescopique à joints universels (41). En vue de dessus (figure 1), on voit que l'arbre de sortie (34) dé la partie inférieure (30) du carter intermédiaire (28) et l'arbre d'entrée (39) du carter d'entrée (40) sont au moins sensiblement parallèles et que dans la même vue, l'arbre de transmission à joints universels (41) s'étend au moins sensiblement parallèlement à la direction d'avance (12) au travail. En travail normal (figure 2), il est du reste prévu que ledit arbre d'entrée (39) du carter d'entrée (40) et l'arbre de sortie (34) de la partie inférieure (30) du carter intermédiaire (28) s'étendent au moins sensiblement à la même hauteur par rapport au sol (109).

Sur la figure 1 apparaît également très précisément la forme du châssis (14). Celui-ci se compose, pour l'essentiel, d'un élément médian (42) et de deux éléments latéraux (43, 44) s'étendant chacun d'un côté respectif dudit élément médian (42). L'élément médian (42) se compose principalement du palier (38) et d'une console (45) qui s'étend vers l'avant au moins sensiblement horizontalement et au moins sensiblement suivant la direction d'avance (12) au travail. Ladite console (45) est avantageusement liée rigidement, mais néanmoins de manière amovible, au palier (38). Les éléments latéraux (43, 44), quant à eux, sont chacun constitués par une poutre (46) s'étendant au moins sensiblement horizontalement et transversalement à la direction d'avance (12) au travail. A l'extrémité extérieure de chaque poutre (46), c'est-à-dire l'extrémité éloignée du palier (38), est fixée une jambe (47) s'étendant vers le bas. C'est à l'extrémité inférieure de cette jambe (47) qu'est lié le bras de roue (16) de la roue (15) correspondante. Chaque élément latéral (43, 44) est également lié rigidement et de manière amovible au palier (38).

Sur les figures 1 et 2, il apparaît par ailleurs que le groupe d'organes de travail (19) s'étend transversalement à la direction d'avance (12) au travail, de même que sous la console (45) de l'élément médian (42) du châssis (14), à l'extrémité frontale de laquelle il est lié au moyen du dispositif de suspension (22). Celui-ci comporte un premier organe de suspension (48) lié d'une part à la console (45) du châssis (14) au moyen d'une première articulation (49) du type rotule, et d'autre part à une traverse (50) du groupe d'organes de travail (19) au moyen d'une deuxième articulation (51) également du type rotule. Comme visible sur la figure 2 notamment, cette deuxième articulation (51) s'étend plus bas et, compte tenu du sens d'avance (12) au travail, plus en arrière que la première articulation (49).

Le dispositif de suspension (22) comporte encore un deuxième organe de suspension (52) lié à la console (45) du châssis (14) au moyen d'une première articulation (53) du type pivot d'axe géométrique au moins sensiblement horizontal et dirigé au moins sensiblement perpendiculairement à la direction d'avance (12) au travail. Ce deuxième organe de suspension (52) est, par ailleurs, lié au carter d'entrée (40) du groupe d'organes de travail (19) au moyen d'une deuxième articulation (55) du type rotule, qui s'étend, comme visible sur la figure 2, plus bas, et compte tenu du sens d'avance (12) au travail, plus en arrière que la première articulation (53). Ce deuxième organe de suspension (52) est agencé de telle sorte qu'un premier plan (56) passant par le centre de sa deuxième articulation (55) et orthogonal à l'axe géométrique de sa première articulation (53), contienne au moins sensiblement le centre de la première articulation (49) du premier organe de suspension (48) et soit au moins sensiblement vertical. Ce deuxième organe de suspension (52) est, par ailleurs, également agencé de telle sorte que la première articulation (53) s'étende plus haut et, compte tenu du sens d'avance (12) au travail, plus en arrière que la première articulation (49) du premier organe (48). Le deuxième organe de suspension (52) s'étend ainsi plus haut que le premier organe de suspension (48). Ce premier organe de suspension (48) est, par ailleurs, agencé de telle sorte que lorsque le groupe d'organes de travail (19) repose sur un sol (109) horizontal, le centre de sa deuxième articulation (51) s'étende au moins sensiblement dans le premier plan (56). Du reste, les premières articulations (49, 53) et les deuxièmes articulations (51 ; 55) des deux organes de suspension (48 ; 52) sont agencés de telle sorte que ces deux organes de suspension (48 ; 52) forment avec le châssis (14) et le groupe d'organes de travail (19), au moins sensiblement un parallélogramme déformable notamment dans le premier plan (56). Comme par ailleurs, les premières articulations (49 ; 53) s'étendent, compte tenu du sens d'avance (12) au travail, plus en avant que les deuxièmes articulations (51 55), ledit parallélogramme déformable est tiré, ce qui permet au groupe d'organes de travail (19) de bien passer par-dessus les obstacles.

Le dispositif de suspension (22) comporte ensuite un premier organe de suspension latéral (60) lié à la console (45) du châssis (14) au moyen d'une première articulation (61) du type rotule dont le centre est au moins sensiblement situé sur l'axe géométrique de la première articulation (53) du deuxième organe de de suspension (52), ainsi qu'au moins sensiblement dans ledit premier plan. Ce premier organe de suspension latéral (60) est, par ailleurs, lié au groupe d'organes de travail (19) au moyen d'une deuxième articulation (63) également du type rotule.

Le deuxième dispositif de suspension (22) comporte ensuite encore un deuxième organe de suspension latéral (66) lié à la console (45) du châssis (14) au moyen d'une première articulation (67) du type rotule dont le centre est au moins sensiblement situé sur l'axe géométrique de la première articulation (53) du deuxième organe de suspension (52), ainsi qu'au moins sensiblement dans ledit premier plan (56). Préférentiellement, le centre de la première articulation (67) du deuxième organe de suspension latéral (66) est confondu avec le centre de la première articulation (61) du premier organe de suspension latéral (60). Ce deuxième organe de suspension latéral (66) est, par ailleurs, lié au groupe d'organes de travail (19) au moyen d'une deuxième articulation (69) également du type rotule.

Les deux organes de suspension latéraux (60, 66) sont agencés de telle manière que les centres de leurs deuxièmes articulations (63, 69), le centre de la deuxième articulation (55) du deuxième organe de suspension (52) et les centres confondus des premières articulations (61, 67) des deux organes de suspension latéraux (60, 66) sont au moins sensiblement situés dans un deuxième plan qui, lorsque le groupe d'organes de travail (19) repose sur un sol (109) horizontal, est au moins sensiblement orthogonal audit premier plan (56).

Sur la figure 1, il apparaît encore que la deuxième articulation (63) du premier organe de suspension latéral (60) s'étend -faucheuse (1) vue de l'arrière dans le sens d'avance (12) au travail- sensiblement dans la partie médiane de la partie du groupe d'organes de travail (19) s'étendant du même côté du plan médian (11) que ledit premier organe de suspension latéral (60). De même, il apparaît aussi que la deuxième articulation (69) du deuxième organe de suspension latéral (66) s'étend -faucheuse (1) vue de l'arrière dans le sens d'avance (12) au travail- sensiblement dans la partie médiane de la partie du groupe d'organes de travail (19) s'étendant du même côté du plan médian (11) que ledit deuxième organe de suspension latéral (66).

Les deux organes de suspension (48, 52) et les deux organes de suspension latéraux (60, 66), constituant le dispositif de suspension (22), sont formés chacun par une bielle rigide.

Tel que visible sur la figure 2, la faucheuse (1) comporte encore un dispositif de relevage (110) du groupe d'organes de travail (19). Ce dispositif se compose d'un vérin hydraulique (111) dont le cylindre (112) est lié au châssis (14) et dont la tige (113) est liée à une chaîne (114). Cette chaîne (114) s'enroule partiellement sur une roue (115) guidée en rotation dans le châssis (14), et est liée à son extrémité éloignée du vérin hydraulique (111) au deuxième organe de suspension (52). Au travail, ce dispositif de relevage (110) ne gêne pas le déplacement du groupe d'organes de travail (19) par rapport au châssis (14). Lorsque le groupe d'organes de travail (19) doit être relevé, il suffira de faire entrer la tige (113) dans le corps (112) du vérin hydraulique (111) en injectant du fluide dans celui-ci. Ce faisant, la tige (113) tire, via la chaîne (114), sur le deuxième organe de suspension (52), ce qui a pour effet de faire monter le groupe d'organes de travail (19) par déformation du parallélogramme déformable.

Comme dit ci-dessus, le groupe d'organes de travail (19) est muni d'organes de coupe (20, 20′, 20˝) et d'organes de traitement (21) du produit coupé par les organes de coupe (20, 20′, 20˝).

Ledit groupe d'organes de travail (19) s'étend, au travail, transversalement à la direction d'avance (12) au travail. Il comprend tout d'abord une structure porteuse (116) à laquelle est liée une barre de coupe (117) réalisée en deux parties (118, 119) munies chacune d'un certain nombre desdits organes de coupe (20, 20′, 20˝).

Chaque partie de barre de coupe (118, 119) comporte un carter (120, 121) au-dessus duquel s'étendent les organes de coupe (20, 20', 20˝) correspondants. Les organes de coupe (20, 20', 20˝) sont, dans l'exemple représenté, réalisés sous forme d'organes de coupe rotatifs tournant chacun autour d'un axe respectif dirigé vers le haut. A cet effet, lesdits organes de coupe (20, 20′, 20˝) sont guidés en rotation dans le carter (120, 121) correspondant qui contient une partie des éléments d'entraînement (122, 123) desdits organes de coupe (20, 20', 20˝) rotatifs. Cet agencement est connu de l'homme de l'art et ne sera donc pas décrit plus en détail. Du reste, l'organe de coupe (20) s'étendant à l'extrémité (124, 125) d'une partie de barre de coupe (118, 119) adjacente à l'autre partie de barre de coupe (119, 118), est surmonté d'un rotor (126, 127) tournant autour du même axe que ledit organe de coupe (20). De même, l'organe de coupe (20˝) s'étendant à l'extrémité extérieure (128, 129) d'une partie de barre de coupe (118, 119) est également surmonté d'un rotor (130, 131) tournant autour du même axe que ledit organe-de coupe (20˝).

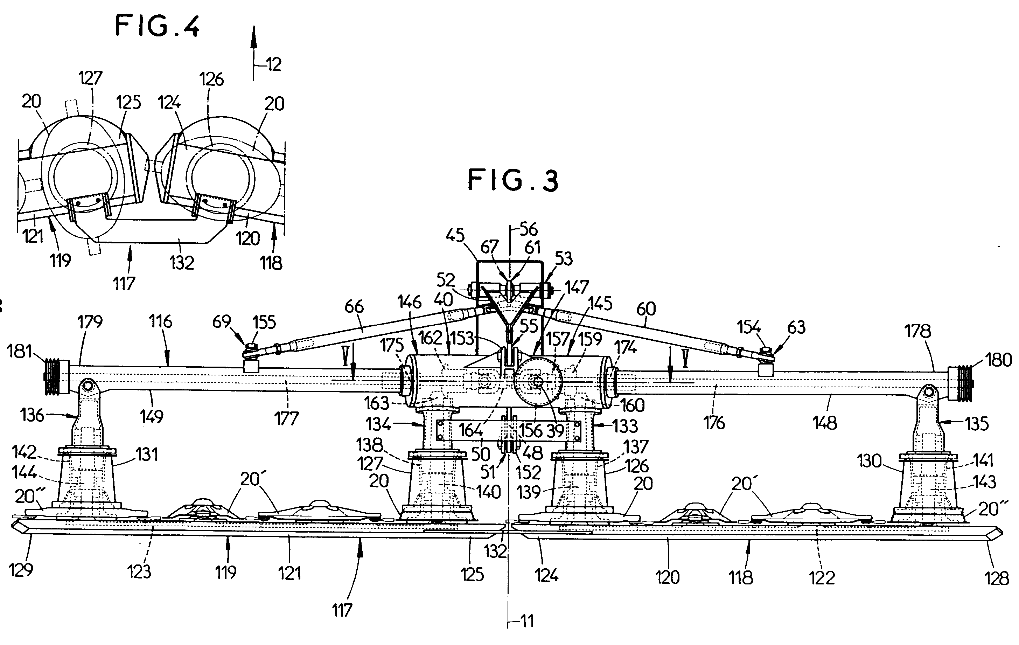

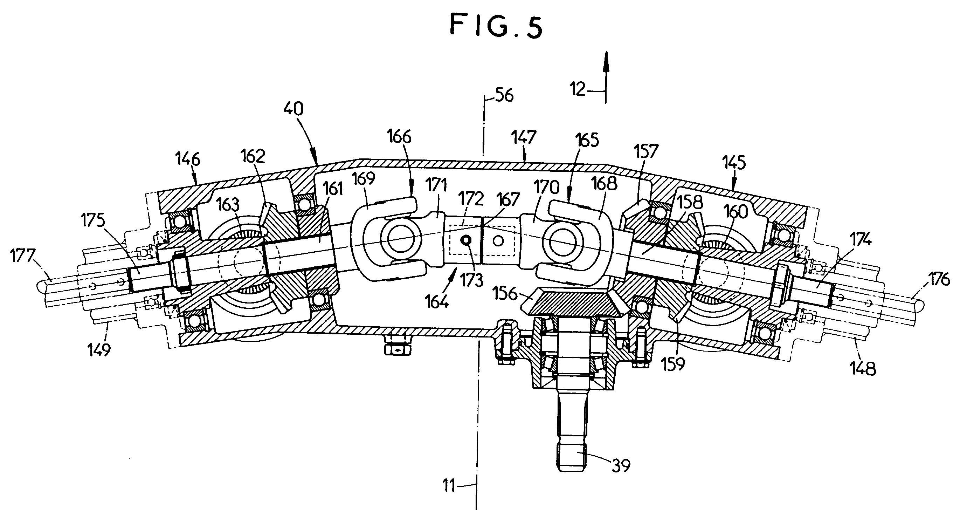

Sur les figures 3 et 4, il apparait du reste, que les deux parties de barre de coupe (118, 119) sont directement accouplées l'une à l'autre au moyen d'un élément d'accouplement (132). Cet élément d'accouplement (132) s'étend, en vue de dessus, pour l'essentiel derrière les carters (120, 121) des deux parties de barre de coupe (118, 119) et est vissé à chacune des extrémités (124, 125) de celles-ci. Du reste, cet élément d'accouplement (132) s'étend, dans l'exemple représenté, sous le plan de coupe généré par les organes de coupe (20) agencés aux extrémités adjacentes (124, 125) des deux parties de barre de coupe (118, 119).

Comme dit ci-avant, la barre de coupe (117) ainsi formée, est liée à la structure porteuse (116). A cet effet, ladite structure porteuse (116) comporte deux organes porteurs centraux (133, 134) et deux organes porteurs extérieurs (135, 136), de telle sorte que chaque partie de barre de coupe (118, 119) soit liée, à son extrémité (124, 125) voisine de l'autre partie de barre de coupe (119, 118), à un organe porteur central (133, 134) et, à son extrémité extérieure (128, 129), à un organe porteur extérieur (135, 136).

Chaque organe porteur central (133, 134) est constitué par un fût (137, 138) qui pénètre dans le rotor (126, 127) aménagé à l'extrémité (124, 125) correspondante de la partie de barre de coupe (118, 119), en traversant la partie supérieure de celui-ci. Les éléments d'entraînement (122, 123) de chaque partie de barre de coupe (118, 119), quant à eux, comportent un arbre d'entraînement (139, 140) qui est guidé en rotation dans le fût (137, 138) correspondant et, de surcroît, lié en translation à celui-ci.

De même, chaque organe porteur extérieur (135, 136) est également constitué par un fût (141, 142) qui pénètre dans le rotor (130, 131) aménagé à l'extrémité extérieure (128, 129) de la partie de barre de coupe (118, 119) correspondante, en traversant la partie supérieure de celui-ci. Les éléments d'entraînement (122, 123) de chaque partie de barre de coupe (118, 119) comportent, par ailleurs, un arbre (143, 144) qui pénètre dans le rotor (130, 131), notamment en vue de l'entraînement en rotation de celui-ci, ainsi que de l'organe de coupe (20˝) qu'il surmonte. Cet arbre (143, 144) est guidé en rotation dans le fût (141, 142) et, de surcroît, lié en translation à celui-ci. De cette sorte chaque partie de barre de coupe (118, 119) est liée aux fûts (137, 141 et 138, 142) correspondants.

Dans l'exemple de réalisation représenté, on voit que le carter d'entrée (40) fait également partie de la structure porteuse (116). Ce carter d'entrée (40), réalisé sous forme de pièce unique rigide, se compose en fait de deux carters de renvoi d'angle (145, 146) et d'un carter de distribution (147) qui s'étend entre les deux carters de renvoi d'angle (145, 146). Une description plus détaillée de ce carter d'entrée (40) sera faite plus loin. Chaque carter de renvoi d'angle (145, 146) s'étend au-dessus de l'extrémité (124, 125) respective d'une partie de barre de coupe (118, 119) et il est prévu que le fût (137, 138) de chaque organe porteur central (133, 134) soit lié rigidement, mais de manière amovible au carter de renvoi d'angle (145, 146) correspondant.

Les deux organes porteurs centraux (133, 134) sont ainsi liés indirectement entre eux au moyen du carter d'entrée (40) qui, comme dit ci-dessus, est constitué par une pièce unique rigide.

Sur la figure 3, il apparait également très clairement que les deux organes porteurs centraux (133, 134) (précisément les deux fûts (137, 138)) sont en sus liés directement et rigidement entre eux au moyen de la traverse (50) qui s'étend au-dessus des deux rotors (126, 127) aménagés aux deux extrémités (124, 125) adjacentes des deux parties de barre de coupe (118, 119).

La structure porteuse (116) comporte en sus deux tubes porteurs (148, 149) s'étendant chacun à une certaine distance au-dessus des organes de coupe (20, 20′, 20˝) de la partie de barre de coupe (118, 119) correspondante. Le tube porteur (148), correspondant à la partie de barre de coupe (118), s'étend entre le carter de renvoi d'angle (145) auxquel il est lié rigidement, mais de manière amovible, et l'organe porteur extérieur (135) auquel il est également lié. De même, le tube porteur (149), correspondant à la partie de barre de coupe (119), s'étend entre le carter de renvoi d'angle (146) auxquel il est lié rigidement, mais de manière amovible, et l'organe porteur extérieur (136) auquel il est également lié.

Comme dit ci-avant, le groupe d'organes de travail (19) comporte également des organes de traitement (21) du produit coupé par les organes de coupe (20, 20′, 20˝). Ces organes de traitement (21), tels que des organes de conditionnement du produit coupé par les organes de coupe (20, 20′, 20˝) par exemple, n'ont pas été détaillés sur les figures, Sur la figure 1, il apparaît toutefois que, dans l'exemple représenté, il est associé à chaque partie de barre de coupe (118, 119) une partie d'organes de traitement (150, 151).

Sur la figure 1, il apparait également que les deux parties de barre de coupe (118, 119) forment entre elles, en vue de dessus, un angle obtus inférieur à 180° et ouvert vers l'arrière.

Le groupe d'organes de travail (19) ainsi formé, comporte encore un certain nombre de moyens de liaison par l'intermédiaire desquels il est lié au dispositif de suspension (22). C'est ainsi :
- que sur la traverse (50) est prévue une chape (152) à laquelle est liée l'extrémité arrière du premier organe de suspension (48),
- que sur le carter d'entrée (40) est prévue une chape (153) à laquelle est liée l'extrémité arrière du deuxième organe de suspension (52),
- que sur le tube porteur (148), correspondant à la partie de barre de coupe (118), est prévu un axe (154), auquel est liée l'extrémité arrière du premier organe de suspension latéral (60), et
- que sur le tube porteur (149), correspondant à la partie de barre de coupe (119), est prévu un axe (155), auquel est liée l'extrémité arrière du deuxième organe de suspension latéral (66).

Le carter d'entrée (40) apparaît sur la figure 3, mais surtout en détail sur la figure 5. Comme dit ci-avant, ce carter d'entrée (40) est réalisé en une pièce unique rigide et se compose de deux carters de renvoi d'angle (145, 146) et d'un carter de distribution (147) qui s'étend entre les deux carters de renvoi d'angle (145, 146).

L'arbre d'entrée (39) du carter d'entrée (40) est, en fait, l'arbre d'entrée du carter de distribution (147). A l'intérieur du carter de distribution (147), ledit arbre d'entrée (39) est muni d'une première roue dentée conique (156) qui engrène avec une deuxième roue dentée conique (157) liée à l'arbre d'entrée (158) du carter de renvoi d'angle (145) correspondant à la partie de barre de coupe (118). La première roue dentée conique (156) et la deuxième roue dentée conique (157) constituent le renvoi d'angle de distribution.

A l'intérieur du carter de renvoi d'angle (145) correspondant à la partie de barre de coupe (118), l'arbre d'entrée (158) de ce carter de renvoi d'angle (145) est muni d'une première roue dentée conique (159) qui engrène avec une deuxième roue dentée conique (160) liée à l'extrémité supérieure de l'arbre d'entraînement (139) faisant partie des éléments d'entraînement (122) de la partie de barre de coupe (118) correspondante (figure 3). La première roue dentée conique (159) et la deuxième roue dentée conique (160) constituent la renvoi d'angle correspondant à la partie de barre de coupe (118), c'est-à-dire celle qui, faucheuse (1) vue de l'arrière dans le sens d'avance (12) au travail, s'étend à droite du plan médian (11). L'arbre d'entrée (39) du carter de distribution (147) et l'arbre d'entrée (158) du carter de renvoi d'angle (145) correspondant à la partie de barre de coupe (118) sont sensiblement situées dans un plan horizontal. Du reste, l'arbre d'entrée (39) est dirige, compte tenu du sens d'avance (12) au travail, vers l'arrière parallèlement à la direction d'avance (12) au travail, tandis que l'arbre d'entrée (158) du carter de renvoi d'angle (145) est parallèle à la direction de la partie de barre de coupe (118) correspondante. De cette sorte, l'arbre d'entrée (39) et l'arbre d'entrée (158) forment entre eux un angle dont la valeur est égale à la moitié de la valeur de l'angle obtus que forment les deux parties de barre de coupe (118, 119) entre elles. L'arbre d'entrée (158) du carter de renvoi d'angle (145) et l'arbre d'entraînement (139) correspondant à la partie de barre de coupe (118) sont, quant à eux, orthogonaux. L'arbre d'entraînement (139) s'étend à partir du carter de renvoi d'angle (145) vers le bas et quelque peu vers l'arrière d'une valeur correspondant à l'angle de piquage de la partie de barre de coupe (118).

Le carter de renvoi d'angle (146), correspondant à la partie de barre de coupe (119), c'est-à-dire celle qui, faucheuse (1) vue de l'arrière dans le sens d'avance (12) au travail, s'étend à gauche du plan médian (11), comporte également un arbre d'entrée (161). A l'intérieur de ce carter de renvoi d'angle (146), ledit arbre d'entrée (161) est muni d'une première roue dentée conique (162) qui engrène avec une deuxième roue dentée conique (163) liée à l'extrémité supérieure de l'arbre d'entraînement (140) faisant partie des éléments d'entraînement (123) de la partie de barre de coupe (119) correspondante (figure 3). La première roue dentée conique (162) et la deuxième roue dentée conique (163) constituent le renvoi d'angle correspondant à la partie de barre de coupe (119). L'arbre d'entrée (161) du carter de renvoi d'angle (146) est également situé dans le plan horizontal dans lequel sont situés les arbres d'entrée (39 et 158). Du reste, l'arbre d'entrée (161) du carter de renvoi d'angle (146) est parallèle à la direction de la partie de barre de coupe (119) correspondante. De cette sorte, l'arbre d'entrée (158) du carter de renvoi d'angle (145) et l'arbre d'entrée (161) du carter de renvoi d'angle (146) forment entre eux un angle dont la valeur est égale à la valeur de l'angle obtus que forment les deux parties de barre de coupe (118, 119) entre elles. L'arbre d'entrée (161) et l'arbre d'entraînement (140), correspondant à la partie de barre de coupe (119), sont, quant à eux, également orthogonaux. Cet arbre d'entraînement (140) s'étend par ailleurs également à partir du carter de renvoi d'angle (146) vers le bas et quelque peu vers l'arrière d'une valeur correspondant à l'angle de piquage de la partie de barre de coupe (119).

L'extrémité de l'arbre d'entrée (158) du carter de renvoi d'angle (145) et l'extrémité de l'arbre d'entrée (161) du carter de renvoi d'angle (146), s'étendant à l'intérieur du carter de distribution (147), sont accouplées l'une à l'autre au moyen d'un accouplement (164) qui comporte deux joints universels (165, 166) s'étendant au moins sensiblement symétriquement de part et d'autre d'un plan vertical dirigé suivant la direction d'avance (12) au travail et passant par le sommet (167) de l'angle obtus formé par les deux arbres d'entrée (158, 161), c'est-à-dire, de l'angle obtus formé par les deux parties de barre de coupe (118, 199). Chaque joint universel (165, 166) comporte une mâchoire (168, 169) liée à l'extrémité respective de l'arbre d'entrée (158, 161) correspondant. Chaque joint universel (165, 166) comporte, en sus, une deuxième mâchoire (170, 171). Ces deuxièmes mâchoires (170, 171) sont liées l'une à l'autre au moyen d'un axe cannelé (172) fixé rigidement sur l'une (171) des deuxièmes mâchoires (170, 171) au moyen d'une goupille (173).

Chaque carter de renvoi d'angle (145, 146) comporte en sus un arbre de sortie (174, 175). Dans l'exemple représenté, l'arbre de sortie (174, 175) forme d'ailleurs avec l'arbre d'entrée (158, 161) correspondant une même pièce. Chaque arbre de sortie (174, 175) transmet le mouvement à un arbre de transmission (176, 177) correspondant guidé en rotation dans le tube porteur (148, 149) respectif et, de surcroît, lié en translation à celui-ci. Chaque arbre de transmission (176, 177) sort du tube porteur (148, 149) correspondant à l'extrémité extérieure (178, 179) de celui-ci et est lié à cet endroit à un organe de transmission (180, 181). Dans l'exemple représenté, cet organe de transmission (180, 181) est constitué par une poulie. Chaque organe de transmission (180, 181) sert à fournir le mouvement aux organes de traitement (21) de la partie d'organes de traitement (150, 151) correspondante. Sur la figure 1, ces organes de transmission (180, 181) n'apparaissent pas étant donné qu'ils sont logés sous un capot (182, 183) respectif.

Diverses modifications peuvent être apportées à l'exemple de réalisation décrit ci-dessus sans qu'on ne sorte pour autant du cadre général de la présente invention tel que défini dans les revendications suivantes.

C'est ainsi par exemple que le carter (120) de la partie de barre de coupe (118) et le carter (121) de la partie de barre de coupe (119) pourraient être réalisés en une seule pièce et constituer un carter unique. Dans ce cas, c'est la partie médiane du carter unique qui joue le rôle d'élément d'accouplement (équivalent à l'élément d'accouplement (132) de l'exemple réprésenté) entre les deux parties de barre de coupe (118, 119).

L'organe porteur central (133, 134) et/ou l'organe porteur extérieur (135, 136) pourraient également porter la partie de barre de coupe (118, 119) correspondante en ne pénétrant pas dans le rotor (126, 127) et (130, 131) correspondant, mais en passant, compte tenu du sens d'avance (12) au travail, derrière celui-ci.

Le groupe d'organe de travail (19), quant à lui, pourrait très bien ne comporter que des organes de coupe (20, 20′, 20˝).

Par ailleurs, il pourrait être prévu une seule partie d'organes de traitement (21) s'étendant à la fois derrière la partie de barre de coupe (118) et la partie de barre de coupe (119).

Du reste, la faucheuse (1) de l'exemple décrit est une faucheuse traînée. On comprendra que l'invention peut toutefois s'appliquer à d'autres faucheuses, telles qu'une faucheuse destinée à être attelée à l'attelage frontal d'un véhicule moteur par exemple.

Par ailleurs, les organes de coupe (20, 20′, 20˝) pourront être différents des disques équipant la faucheuse représentée.

On pourra enfin également prévoir que le groupe d'organes de travail (19) soit lié directement, sans dispositif de liaison (22), à la structure destinée, lors de l'utilisation de ladite faucheuse, à être attelée à un véhicule moteur.

## Revendications

1. Faucheuse (1) comportant un groupe d'organes de travail (19) s'étendant, au travail, transversalement à la direction d'avance (12) au travail, comprenant une structure porteuse (116) à laquelle est liée une barre de coupe (117) réalisée en deux parties (118, 119) de barre de coupe liées rigidement l'une à l'autre et munies chacune d'organes de coupe (20, 20′, 20˝) et d'éléments d'entraînement (122, 123) s'étendant, au moins partiellement, sous lesdits organes de coupe (20, 20′, 20˝), ladite structure porteuse (116) comportant au moins un organe porteur central (133, 134) lié à la barre de coupe (117), ledit groupe d'organes de travail (19) comportant, en sus, des moyens d'entraînement (40) qui s'étendent notamment au-dessus des extrémités (124, 125) adjacentes des deux parties de barre de coupe (118, 119) et qui reçoivent le mouvement d'une source motrice (23) via des moyens de transmission (24, 8, 25, 26, 27, 32, 31, 36, 33, 35, 34, 41), lesdits moyens d'entraînement (40) comprenant deux organes d'entraînement (145, 158, 159, 160, 146, 161, 162, 163) comportant chacun un renvoi d'angle (159, 160, 162, 163), le premier organe d'entraînement (145, 158, 159, 160) étant accouplé aux éléments d'entraînement (122) de la première partie de barre de coupe (118) et le deuxième organe d'entraînement (146, 161, 162, 163) étant accouplé aux éléments d'entraînement (123) de la deuxième partie de barre de coupe (119), ledit groupe d'organes de travail (19) étant, en sus, muni de moyens de liaison (152, 153, 154, 155) par l'intermédiaire desquels il est lié à une structure (4, 14, 22) destinée à être attelée à un véhicule moteur (2), caractérisée par le fait que :
a) la structure porteuse (116) comporte deux organes porteurs centraux (133, 134) dont le premier (133) est lié à la première partie de barre de coupe (118) et dont le deuxième (134) est lié à la deuxième partie de barre de coupe (119) ;
b) le premier organe d'entraînement (145, 158, 159, 160) s'étend au-dessus de l'extrémité intérieure (124) de la première partie de barre de coupe (118) où il est accouplé aux éléments d'entraînement (122) de cette première partie de barre de coupe (118), et le deuxième organe d'entraînement (146, 161, 162, 163) s'étend au-dessus de l'extrémité intérieure (125) de la deuxième partie de barre de coupe (119) où il est accouplé aux éléments d'entraînement (123) de cette deuxième partie de barre de coupe (119) ;
c) chaque organe porteur central (133, 134) est lié rigidement au carter de renvoi d'angle (145, 146) de l'organe d'entraînement (145, 158, 159, 160, 146, 161, 162, 163) correspondant ;
d) les deux organes porteurs centraux (133, 134) sont directement et/ou indirectement liés rigidement entre-eux ; et
e) une partie desdits moyens de liaison (152, 153) est prévue sur la liaison rigide directe et/ou indirecte entre les deux organes porteurs centraux (133, 134).

2. Faucheuse selon la revendication 1, caractérisée par le fait que les deux parties de barre de coupe (118, 119) sont, à leurs extrémités (124, 125) adjacentes, surmontées chacune d'un rotor (126, 127) tournant autour d'un axe dirigé vers le haut.

3. Faucheuse selon la revendication 2, caractérisée par le fait que le premier organe porteur central (133) pénètre dans le rotor (126) correspondant de la première partie de barre de coupe (118) en traversant la partie supérieure de celui-ci et que le deuxième organe porteur central (134) pénètre dans le rotor (127) correspondant de la deuxième partie de barre de coupe (119) en traversant la partie supérieure de celui-ci.

4. Faucheuse selon l'une au moins des revendications 1 à 3, caractérisée par le fait que chaque organe porteur central (133, 134) est lié de manière démontable au carter de renvoi d'angle (145, 146) correspondant.

5. Faucheuse selon l'une au moins des revendications 1 à 4, caractérisée par le fait que les deux parties de barre de coupe (118, 119) sont, en sus, directement accouplées l'une à l'autre au moyen d'un élément d'accouplement (132) s'étendant, en partie au moins, sous le plan de coupe des organes de coupe (20, 20′, 20˝).

6. Faucheuse selon la revendication 5, caractérisée par le fait que l'élément d'accouplement (132) accouple les deux parties de barre de coupe (118, 119) rigidement entre elles.

7. Faucheuse selon l'une au moins des revendications 1 à 6, caractérisée par le fait que les deux organes porteurs centraux (133, 134) sont liés directement entre eux au moyen d'une traverse (50).

8. Faucheuse selon la revendication 7, caractérisée par le fait que des moyens de liaison (152) sont prévus sur la traverse (50).

9. Faucheuse selon l'une au moins des revendications 1 à 8, caractérisée par le fait que les carters de renvoi d'angle (145, 146) sont liés rigidement entre eux.

10. Faucheuse selon la revendication 9, caractérisée par le fait que des moyens de liaison (153) sont prévus sur les carters de renvoi d'angle (145, 146) liés rigidement entre eux.

11. Faucheuse selon l'une au moins des revendications 1 à 10, caractérisée par le fait que chaque organe porteur central (133, 134) comporte notamment un fût (137, 138), tandis que les éléments d'entraînement (122, 123) de la partie de barre de coupe (118, 119) correspondante comportent un arbre d'entraînement (139, 140) tournant autour d'un axe dirigé vers le haut et entraîné en rotation par le renvoi d'angle (159, 160, 162, 163) correspondant, ledit arbre d'entraînement (139, 140) étant guidé en rotation dans ledit fût (137, 138) et, de surcroît, lié en translation à celui-ci, de telle sorte que ladite partie de barre de coupe (118, 119) soit liée audit fût (137, 138) par l'intermédiaire dudit arbre d'entraînement (139, 140).

12. Faucheuse selon la revendication 11, prise en combinaison avec les revendications 7 et 2 ou 8 et 2, caractérisée par le fait que la traverse (50) lie rigidement les deux fûts (137, 138) entre eux au-dessus des deux rotors (126, 127) correspondants.

13. Faucheuse selon l'une au moins des revendications 1 à 12, caractérisée par le fait que chaque carter de renvoi d'angle (145, 146) comporte un arbre d'entrée (158, 161) s'étendant dans un plan au moins sensiblement horizontal, lesdits arbres d'entrée (158, 161) étant au moins sensiblement dirigés l'un vers l'autre, et que lesdits moyens d'entraînement comportent, en sus, un carter de renvoi d'angle de distribution (147) s'étendant au moins partiellement entre les deux carters de renvoi d'angle (145, 146) et transmettant le mouvement aux arbres d'entrée (158, 161) desdits carters de renvoi d'angle (145, 146).

14. Faucheuse selon la revendication 13 prise en combinaison avec la revendication 9 ou 10, caractérisée par le fait que les carters de renvoi d'angle (145, 146) sont liés rigidement entre eux au moyen du carter de renvoi d'angle de distribution (147).

15. Faucheuse selon la revendication 14, caractérisée par le fait que les carters de renvoi d'angle (145, 146) et le carter de renvoi d'angle de distribution (147) forment un carter d'entrée unique (40) réalisé en une seule pièce.

16. Faucheuse selon l'une au moins des revendications 13 à 15, caractérisée par le fait que l'arbre d'entrée (39) du carter de renvoi d'angle de distribution (147) est dirigé, compte tenu du sens d'avance (12) au travail, vers l'arrière.

17. Faucheuse selon l'une au moins des revendications 1 à 16, caractérisée par le fait que la structure (4, 14, 22) à laquelle est lié le groupe d'organes de travail (19), comporte un châssis (14) et un dispositif de suspension (22) lié notamment aux moyens de liaison (152, 153) du groupe d'organes de travail (19) et destiné à suspendre le groupe d'organes de travail (19) dans ledit châssis (14) de manière que ledit groupe d'organes de travail (19) puisse se déplacer, notamment en hauteur, par rapport audit châssis (14).

18. Faucheuse selon l'une au moins des revendications 1 à 17, caractérisée par le fait que la structure (4, 14, 22) à laquelle est lié le groupe d'organes de travail (19), comporte un châssis (14) s'appuyant sur le sol (109) au moyen de roues (15), et un timon (4) lié audit châssis (14) au moyen d'une liaison pivot (9) d'axe (10) dirigé vers le haut.

19. Faucheuse selon la revendication 18, caractérisée par le fait que ladite liaison pivot (9) est disposée au moins sensiblement dans la partie médiane dudit châssis (14) considéré transversalement à la direction d'avance (12) au travail.

20. Faucheuse selon la revendication 18 ou 19, caractérisée par le fait que ladite liaison pivot (9) est réalisée par un moyeu (37) prévu à l'extrémité arrière du timon (4).

21. Faucheuse selon la revendication 20, caractérisée par le fait que le moyeu (37) est guidé en rotation dans un palier (38) solidaire du châssis (14).

22. Faucheuse selon l'une au moins des revendications 18 à 21, caractérisée par le fait que les moyens de transmission comportent notamment un carter intermédiaire (28) comportant une partie (29) liée au timon (4) et dont l'arbre de sortie (31) a un axe de rotation au moins sensiblement confondu avec l'axe (10) de la liaison pivot (9).

23. Faucheuse selon la revendication 22, caractérisée par le fait que ledit carter intermédiaire (28) comporte une autre partie (30) liée au châssis (14), lesdites parties (29, 30) pouvant tourner l'une par rapport à l'autre autour de l'axe (10) de la liaison pivot (9).

24. Faucheuse selon la revendication 23, caractérisée par le fait que la deuxième partie (30) comporte un arbre d'entrée (33) dont l'axe de rotation est au moins sensiblement confondu avec l'axe (10) de la liaison pivot (9), et que l'arbre de sortie (31) de la première partie (29) et l'arbre d'entrée (33) de la deuxième partie (30) sont accouplés l'un à l'autre au moyen d'un accouplement (36).

25. Faucheuse selon la revendication 24, caractérisée par le fait que ledit accouplement (36) est constitué d'un joint universel.

26. Faucheuse selon l'une au moins des revendications 23 à 25, caractérisée par le fait que la première partie (29) liée au timon (4), s'étend au-dessus de la deuxième partie (30) liée au châssis (14).

27. Faucheuse selon l'une au moins des revendications 23 à 26 dans leur dépendance à la revendication 17, prise en combinaison avec l'une au moins des revendications 13 à 16, caractérisée par le fait que les moyens de transmission comportent, en sus, un arbre de transmission télescopique à joints universels (41) transmettant le mouvement depuis l'arbre de sortie (34) de la deuxième partie (30) du carter intermédiaire (28) jusqu'à l'arbre d'entrée (39) du carter de renvoi d'angle de distribution (147).

28. Faucheuse selon la revendication 27, caractérisée par le fait qu'en vue de dessus, ledit arbre de transmission (41) s'étend au moins sensiblement suivant la direction d'avance (12) au travail.

29. Faucheuse selon la revendication 27 ou 28, caractérisée par le fait que l'arbre de sortie (34) de la deuxième partie (30) du carter intermédiaire (28) s'étend, compte tenu du sens d'avance (12) au travail, derrière l'arbre d'entrée (39) du carter de renvoi d'angle de distribution (147).

30. Faucheuse selon l'une au moins des revendications 27 à 29, caractérisée par le fait que l'arbre de sortie (34) de la deuxième partie (30) du carter intermédiaire (28) et l'arbre d'entrée (39) du carter de renvoi d'angle de distribution (147) sont au moins sensiblement parallèles à la direction d'avance (12) au travail.

31. Faucheuse selon l'une au moins des revendications 27 à 30, caractérisée par le fait qu'en travail normal, l'arbre d'entrée (39) du carter de renvoi d'angle de distribution (147) et l'arbre de sortie (34) de la deuxième partie (30) du carter intermédiaire (28) s'étendent au moins sensiblement à la même hauteur par rapport au sol (109).

32. Faucheuse selon l'une au moins des revendications 1 à 31, caractérisée par le fait que les deux parties de barre de coupe (118, 119) forment entre elles, en vue de dessus, un angle obtus inférieur à 180° et ouvert vers l'arrière.

33. Faucheuse selon la revendication 32 prise en combinaison avec l'une au moins des revendications 13 à 16, caractérisée par le fait que le carter de renvoi d'angle de distribution (147) comporte une roue dentée conique (157) transmettant le mouvement directement à l'arbre d'entrée (158) de l'un (145) des carters de renvoi d'angle (145, 146), et que les arbres d'entrée (158, 161) des deux carters de renvoi d'angle (145, 146) sont accouplés au moyen d'un accouplement (164).

34. Faucheuse selon la revendication 33, caractérisée par le fait que l'accouplement (164) comporte deux joints universels (165, 166) s'étendant au moins sensiblement symétriquement de part et d'autre d'un plan vertical dirigé suivant la direction d'avance (12) au travail et passant par le sommet (167) de l'angle obtus formé par les deux arbres d'entrée (158, 161), c'est-à-dire les deux parties de barre de coupe (118, 119).

35. Faucheuse selon l'une au moins des revendications 1 à 34, caractérisée par le fait que la structure porteuse (116) comporte, en sus, pour chaque partie de barre de coupe (118, 119), d'une part un organe porteur extérieur (135, 136) lié à la partie de barre de coupe (118, 119) correspondante dans le voisinage de l'extrémité extérieure (128, 129) de celle-ci, et, d'autre part, un tube porteur (148, 149) lié rigidement à l'une de ses extrémités au carter de renvoi d'angle (145, 146) correspondant et lié, près de l'autre de ses extrémités, audit organe porteur extérieur (135, 136).

36. Faucheuse selon l'une au moins des revendications 1 à 35, caractérisée par le fait que chaque partie de barre de coupe (118, 119) est, à son extrémité extérieure (128, 129), surmontée d'un rotor (130, 131) tournant autour d'un axe dirigé vers le haut.

37. Faucheuse selon les revendications 35 et 36, caractérisée par le fait que chaque organe porteur extérieur (135, 136) pénètre dans le rotor (130, 131) extérieur correspondant en traversant la partie supérieure de celui-ci.

38. Faucheuse selon la revendication 35 ou 37, caractérisée par le fait que chaque organe porteur extérieur (135, 136) comporte notamment un fût (141, 142), tandis que les éléments d'entraînement (122, 123) de la partie de barre de coupe (118, 119) correspondante comportent un arbre (143, 144) tournant autour d'un axe dirigé vers le haut en vue notamment de l'entraînement en rotation du rotor extérieur (130, 131) correspondant, ledit arbre (143, 144) étant guidé en rotation dans ledit fût (141, 142) et, de surcroît, lié en translation à celui-ci, de telle sorte que ladite partie de barre de coupe (118, 119) soit liée audit fût (141, 142) par l'intermédiaire dudit arbre (143, 144).

39. Faucheuse selon l'une au moins des revendications 35, 37 ou 38, caractérisée par le fait que des moyens de liaison (154, 155) sont également prévus sur l'un au moins des tubes porteurs (148, 149).

40. Faucheuse selon l'une au moins des revendications 35, 37, 38 ou 39, caractérisée par le fait que le carter de renvoi d'angle (145, 146) d'au moins une partie de barre de coupe (118, 119) comporte un arbre de sortie (174, 175) et qu'à l'intérieur du tube porteur (148, 149) correspondant est guidé en rotation un arbre de transmission (176, 177) accouplé, à son extrémité proche du carter de renvoi d'angle (145, 146), à l'arbre de sortie (174, 175) de celui-ci et sortant, à son autre extrémité, de l'extrémité extérieure (178, 179) dudit tube porteur (148, 149).

41. Faucheuse selon l'une au moins des revendications 1 à 40, caractérisée par le fait que le groupe d'organes de travail (19) comporte, en sus, derrière les organes de coupe (20, 20′, 20˝), des organes de traitement (21) du produit coupé par lesdits organes de coupe (20, 20′, 20˝).

42. Faucheuse selon les revendications 40 et 41, caractérisée par le fait que lesdits organes de traitement (21) sont entraînés par ledit (lesdits) arbre(s) de transmission (176, 177).

43. Faucheuse selon la revendication 42, caractérisée par le fait que dans chaque tube porteur (148, 149) est guidé un arbre de transmission (176, 177), qu'à chaque partie de barre de coupe (118, 119) est associée une partie (150, 151) d'organes de traitement (21) et que chaque partie (150, 151) d'organes de traitement (21) est entraînée par l'arbre de transmission (176, 177) correspondant.

44. Faucheuse selon la revendication 43 prise en combinaison avec l'une au moins des revendications 27 ou 28, caractérisée par le fait que ledit arbre de transmission (41) s'étend entre les deux parties (150, 151) d'organes de traitement (21).

45. Faucheuse selon l'une au moins des revendications 41 à 44, caractérisée par le fait que lesdits organes de traitement (21) sont des organes de conditionnement du produit coupé par les organes de coupe (20, 20′, 20˝).

## Patentansprüche

1. Mähmaschine (1), die eine Gruppe von Arbeitsorganen (19) aufweist, die sich im Betrieb quer zur Arbeitsvorschubrichtung (12) erstreckt, und ein Tragwerk (116) umfasst, an das ein Mähbalken (117) angeschlossen ist, der aus zwei Mähbalkenteilen (118, 119) gebildet wird, von denen einer mit dem anderen fest verbunden ist und jeder mit Schneidorganen (20, 20′, 20˝) und Antriebselementen (122, 123) versehen ist, die sich zumindest teilweise unterhalb der Schneidorgane (20, 20′, 20˝) erstrecken, welches Tragwerk (116) mindestens ein mit dem Mähbalken (117) verbundenes, zentrales Tragorgan (133, 134) aufweist, und welche Gruppe von Arbeitsorganen (19) noch Antriebsmittel umfasst, die sich insbesondere oberhalb der benachbarten Enden (124, 125) der zwei Mähbalkenteile (118, 119) erstrecken und die die Bewegung einer Antriebsquelle (23) über Kraftübertragungsmittel (24, 8, 25, 26, 27, 32, 31, 36, 33, 35, 34, 41) übernehmen, welche Antriebsmittel (40) zwei Antriebsorgane (145, 158, 159, 160, 146, 161, 162, 163) umfassen, von denen jedes ein Winkelgetriebe (159, 160, 162, 163) aufweist, wobei das erste Antriebsorgan (145, 158, 159, 160) mit den Antriebselementen (122) des ersten Mähbalkenteiles (118) gekuppelt ist und das zweite Antriebsorgan (146, 161, 162, 163) mit den Antriebselementen (123) des zweiten Mähbalkenteiles (119) gekuppelt ist, und welche Gruppe von Arbeitsorganen (19) noch mit Verbindungsmitteln (152, 153, 154, 155) versehen ist, mittels welcher sie mit einer Vorrichtung (4, 14, 22) zum Ankuppeln an ein Motorfahrzeug (2) verbunden ist, dadurch gekennzeichnet, dass :
a) das Tragwerk (116) zwei zentrale Tragorgane (133, 134) umfasst, von denen das erste (133) mit dem ersten Mähbalkenteil (118) und das zweite (134) mit dem zweiten Mähbalkenteil (119) verbunden sind ;
b) das erste Antriebsorgan (145, 158, 159, 160) sich oberhalb des inneren Endes (124) des ersten Mähbalkenteiles (118) erstreckt, wo es mit den Antriebselementen (122) des ersten Mähbalkenteils (118) gekuppelt ist, und das zweite Antriebsorgan (146, 161, 162, 163) sich oberhalb des inneren Endes (125) des zweiten Mähbalkenteiles (119) erstreckt, wo es mit den Antriebselementen (123) des zweiten Mähbalkenteils (119) gekuppelt ist ;
c) jedes zentrale Tragorgan (133, 134) fest mit dem Winkelgetriebegehäuse (145, 146) des entsprechenden Antriebsorgans (145, 158, 159, 160, 146, 161, 162, 163) verbunden ist ;
d) die zwei zentralen Tragorgane (133, 134) direkt und/oder indirekt miteinander fest verbunden sind ; und
e) ein Teil der Verbindungsmittel (152, 153) auf der direkten und/oder indirekten festen Verbindung zwischen den zwei zentralen Tragorganen (133, 134) angeordnet ist.

2. Mähmaschine nach Anspruch 1, dadurch gekennzeichnet, dass die zwei Mähbalkenteile (118, 119) an ihren benachbarten Enden (124, 125) jeweils von einem um eine nach oben gerichtete Achse drehenden Rotor (126, 127) überlagert sind.

3. Mähmaschine nach Anspruch 2, dadurch gekennzeichnet, dass das erste zentrale Tragorgan (133) in den entsprechenden Rotor (126) des ersten Mähbalkenteils (118) eindringt indem es den oberen Teil des Rotors durchsetzt und das zweite zentrale Tragorgan (134) in den entsprechenden Rotor (127) des zweiten Mähbalkenteils (119) eindringt indem es den oberen Teil des Rotors durchsetzt.

4. Mähmaschine nach mindestens einem der Ansprüche 1 bis 3, dadurch gekennzeichnet, dass jedes zentrale Tragorgan (133, 134) lösbar mit dem entsprechenden Winkelgetriebegehäuse (145,146) verbunden ist.

5. Mähmaschine nach mindestens einem der Ansprüche 1 bis 4, dadurch gekennzeichnet, dass die zwei Mähbalkenteile (118, 119) noch direkt mittels eines Kupplungselementes (132), das sich zumindest teilweise unter der Schneidebene der Schneidorgane (20, 20′, 20˝) erstreckt, aneinandergekuppelt sind.

6. Mähmaschine nach Anspruch 5, dadurch gekennzeichnet, dass das Kupplungselement (132) die zwei Mähbalkenteile (118, 119) fest aneinanderkuppelt.

7. Mähmaschine nach mindestens einem der Ansprüche 1 bis 6, dadurch gekennzeichnet, dass die zwei zentralen Tragorgane (133, 134) direkt miteinander mittels eines Querbalkens (50) verbunden sind.

8. Mähmaschine nach Anspruch 7, dadurch gekennzeichnet, dass die Verbindungsmittel (152) auf dem Querträger (50) vorgesehen sind.

9. Mähmaschine nach mindestens einem der Ansprüche 1 bis 8, dadurch gekennzeichnet, dass die Winkelgetriebegehäuse (145, 146) miteinander fest verbunden sind.

10. Mähmaschine nach Anspruch 9, dadurch gekennzeichnet, dass die Verbindungsmittel (153) auf den miteinander fest verbundenen Winkelgetriebegehäusen (145, 146) angeordnet sind.

11. Mähmaschine nach zumindest einem der Ansprüche 1 bis 10, dadurch gekennzeichnet, dass jedes zentrale Tragorgan (133, 134) insbesondere einen Schaft (137, 138) umfasst, wogegen die Antriebselemente (122, 123) des entsprechenden Mähbalkenteiles (118, 119) eine Antriebswelle (139, 140) aufweisen, die um eine nach oben gerichtete Achse dreht und durch das entsprechende Winkelgetriebe (159, 160, 162, 163) in Drehung versetzt wird, welche Antriebswelle (139, 140) im Schaft (137, 138) drehbar geführt ist und überdies mit jenem unverschiebbar derart verbunden ist, dass der Mähbalkenteil (118, 119) mit dem Schaft (137, 138) mittels der Antriebswelle (139, 140) verbunden ist.

12. Mähmaschine nach Anspruch 11 in Kombination mit den Ansprüchen 7 und 2 oder 8 und 2, dadurch gekennzeichnet, dass der Querbalken (50) die zwei Schäfte (137, 138) fest miteinander oberhalb der zwei entsprechenden Rotoren (126, 127) verbindet.

13. Mähmaschine nach mindestens einem der Ansprüche 1 bis 12, dadurch gekennzeichnet, dass jedes Winkelgetriebegehäuse (145, 146) eine Eingangswelle (158, 161) aufweist, die sich in einer zumindest im wesentlichen horizontalen Ebene erstreckt, welche Eingangswellen (158, 161) mindestens im wesentlichen zueinander hin gerichtet sind, und dass die Antriebsmittel noch ein Verteilungswinkelgetriebegehäuse (147) umfassen, das sich zumindest teilweise zwischen den zwei Winkelgetriebegehäusen (145, 146) erstreckt und die Bewegung auf die Eingangswellen (158, 161) der Winkelgetriebegehäuse (145, 146) überträgt.

14. Mähmaschine nach Anspruch 13 in Kombination mit den Ansprüchen 9 oder 10, dadurch gekennzeichnet, dass die Winkelgetriebegehäuse (145, 146) fest miteinander mittels des Verteilungswinkelgetriebegehäuses (147) verbunden sind.

15. Mähmaschine nach Anspruch 14, dadurch gekennzeichnet, dass die Winkelgetriebegehäuse (145, 146) und das Verteilungswinkelgetriebegehäuses (147) ein einziges Eingangsgehäuse (40) bilden, das aus einem einzigen Stück besteht.

16. Mähmaschine nach mindestens einem der Ansprüche 13 bis 15, dadurch gekennzeichnet, dass die Eingangswelle (39) des Verteilungswinkelgetriebegehäuses (147) bezogen auf die Arbeitsvorschubrichtung (12) nach hinten gerichtet ist.

17. Mähmaschine nach mindestens einem der Ansprüche 1 bis 16, dadurch gekennzeichnet, dass die Vorrichtung (4, 14, 22) zum Ankuppeln, mit der Gruppe von Arbeitsorganen (19) verbunden ist, einen Rahmen (14) und eine Aufhängvorrichtung (22) umfasst, die insbesondere mit den Verbindungsmitteln (152, 153) der Gruppe von Arbeitsorganen (19) verbunden ist und zu einer solchen Aufhängung der Gruppe von Arbeitsorganen (19) am Rahmen (14) bestimmt ist, dass die Gruppe von Arbeitsorganen (19) insbesondere in der Höhe bezogen auf den Rahmen (14) versetzbar sind.

18. Mähmaschine nach mindestens einem der Ansprüche 1 bis 17, dadurch gekennzeichnet, dass die Vorrichtung (4,14,22) zum Ankuppeln, mit der die Gruppe von Arbeitsorganen (19) verbunden ist, einen Rahmen (14), der sich auf dem Boden (109) mittels Rädern (15) abstützt, und eine Deichsel (4) umfasst, die mit dem Rahmen (14) mittels einer Schwenkverbindung (9) mit einer nach oben gerichteten Achse (10) verbunden ist.

19. Mähmaschine nach Anspruch (18), dadurch gekennzeichnet, dass die Schwenkverbindung (9) zumindest im wesentlichen im Mittelteil des Rahmens (14) quer zur Arbeitsvorschubrichtung (12) gesehen angeordnet ist.

20. Mähmaschine nach Anspruch 18 oder 19, dadurch gekennzeichnet, dass die Schwenkverbindung (9) aus einer Nabe (37) gebildet ist, die am hinteren Ende der Deichsel (4) vorgesehen ist.

21. Mähmaschine nach Anspruch 20, dadurch gekennzeichnet, dass die Nabe (37) drehbar in einem am Rahmen (14) fest angeordneten Lager (38) geführt ist.

22. Mähmaschine nach mindestens einem der Ansprüche 18 bis 21, dadurch gekennzeichnet, dass die Kraftübertragungsmittel insbesondere ein Zwischengehäuse (28) umfassen, das einen Teil (29) aufweist, der mit der Deichsel (4) verbunden ist, und dessen Ausgangswelle (31) eine Drehachse hat, die zumindest im wesentlichen mit der Achse (10) der Schwenkverbindung (9) zusammenfällt.

23. Mähmaschine nach Anspruch 22, dadurch gekennzeichnet, dass das Zwischengehäuse (28) einen anderen Teil (30), der mit dem Rahmen (14) verbunden ist, umfasst, wobei die Teile (29, 30), der eine bezogen auf den anderen, um die Achse (10) der Schwenkverbindung (9) drehen können.

24. Mähmaschine nach Anspruch 23, dadurch gekennzeichnet, dass der zweite Teil (30) eine Eingangswelle (33) umfasst, deren Drehachse zumindest im wesentlichen mit der Achse (10) der Schwenkverbindung (9) zusammenfällt und dass die Ausgangswelle (31) des ersten Teils (29) und die Eingangswelle (31) des ersten Teils (29) und die Eingangswelle (33) des zweiten Teils (30) aneinander mittels einer Kupplung (36) gekuppelt sind.

25. Mähmaschine nach Anspruch 24, dadurch gekennzeichnet, dass die Kupplung (36) ein Kardangelenk ist.

26. Mähmaschine nach mindestens einem der Ansprüche 23 bis 25, dadurch gekennzeichnet, dass der mit der Deichsel (4) verbundene erste Teil (29) sich oberhalb des mit dem Rahmen (14) verbundenen zweiten Teils (30) erstreckt.

27. Mähmaschine nach mindestens einem der Ansprüche 23 bis 26 in ihrer Abhängigkeit nach Anspruch 17, in Kombination mit mindestens einem der Ansprüche 13 bis 16, dadurch gekennzeichnet, dass die Kraftübertragungsmittel noch eine teleskopische Kardanwelle (41) umfassen, die die Bewegung von der Ausgangswelle (34) des zweiten Teils (30) des Zwischengehäuses (28) auf die Eingangswelle (39) des Verteilungswinkelgetriebegehäuses (147) überträgt.

28. Mähmaschine nach Anspruch 27, dadurch gekennzeichnet, dass sich, von oben gesehen, die Kraftübertragungswelle (41) zumindest im wesentlichen in Arbeitsvorschubrichtung (12) erstreckt.

29. Mähmaschine nach Anspruch 27 oder 28, dadurch gekennzeichnet, dass sich die Ausgangswelle (34) des zweiten Teils (30) des Zwischengehäuses (28), bezogen auf die Arbeitsvorschubrichtung (12), hinter der Einganswelle (39) des Verteilungswinkelgetriebegehäuses (147) erstreckt.

30. Mähmaschine nach mindestens einem der Ansprüche 27 bis 29, dadurch gekennzeichnet, dass die Ausgangswelle (34) des zweiten Teils (30) des Zwischengehäuses (28) und die Eingangswelle (39) des Verteilungswinkelgetriebegehäuses (147) zumindest im wesentlichen parallel zur Arbeitsvorschubrichtung (12) sind.

31. Mähmaschine nach mindestens einem der Ansprüche 27 bis 30, dadurch gekennzeichnet, dass sich im Normalbetrieb die Eingangswelle (39) des Verteilungswinkelgetriebegehäuses (147) und die Ausgangswelle (34) des zweiten Teils (30) des Zwischengehäuses (28) zumindest im wesentlichen auf auf den Boden (109) bezogener gleicher Höhe erstrecken.

32. Mähmaschine nach mindestens einem der Ansprüche 1 bis 31, dadurch gekennzeichnet, dass die zwei Mähbalkenteile (118, 119) miteinander, von oben gesehen, einen stumpfen und nach hinten offenen Winkel kleiner als 180° einschliessen.

33. Mähmaschine nach Anspruch 32 in Kombination mit mindestens einem der Ansprüche 13 bis 16, dadurch gekennzeichnet, dass das Verteilungswinkelgetriebegehäuse (147) ein Kegelzahnrad (157) umfasst, das die Bewegung direkt auf die Eingangswelle (158) des einen (145) der Winkelgetriebegehäuse (145, 146) überträgt, und dass die Eingangswellen (158, 161) der zwei Winkelgetriebegehäuse (145, 146) mittels einer Kupplung (164) gekuppelt sind.

34. Mähmaschine nach Anspruch 33, dadurch gekennzeichnet, dass die Kupplung (164) zwei Kardangelenke (165, 166) umfasst, die sich zumindest im wesentlichen symmetrisch beidseits einer Vertikalebene erstrecken, die der Arbeitsvorschubrichtung (12) folgend ausgerichtet ist und durch den Scheitel (167) des stumpfen Winkels verläuft, der von den zwei Eingangswellen (158, 161), das heisst den zwei Mähbalkenteilen (118, 119), gebildet wird.

35. Mähmaschine nach mindestens einem der Ansprüche 1 bis 34, dadurch gekennzeichnet, dass das Tragwerk (116) noch für jeden Mähbalkenteil (118, 119) einerseits ein äusseres Tragorgan (135, 136), das mit dem entsprechenden Mähbalkenteil (118, 119) in der Nähe des äusseren Endes (128, 129) desselben verbunden ist, und anderseits einen Rohrträger (148, 149) umfasst, der an dem einen seiner Enden mit dem entsprechenden Winkelgetriebegehäuse (145,146) fest verbunden ist und nahe dem anderen seiner Enden mit dem äusseren Tragorgan (135, 136) verbunden ist.

36. Mähmaschine nach mindestens einem der Ansprüche 1 bis 35, dadurch gekennzeichnet, dass jeder Mähbalkenteil (118, 119) an seinem äusseren Ende (128, 129) von einem Rotor (130, 131) überlagert ist, der um eine nach oben gerichtete Achse dreht.

37. Mähmaschine nach den Ansprüchen 35 und 36, dadurch gekennzeichnet, dass jedes äussere Tragorgan (135, 136) in den entsprechenden äusseren Rotor (130, 131) eindringt idem es den oberen Teil desselben durchsetzt.

38. Mähmaschine nach Anspruch 35 oder 37, dadurch gekennzeichnet, dass jedes äussere Tragorgan (135, 136) insbesondere einen Schaft (141, 142) aufweist, wogegen die Antriebselemente (122, 123) des entsprechenden Mähbalkenteils (118, 119) eine insbesondere zum Rotationsantrieb des entsprechenden äusseren Rotors (130, 131) dienende Welle (143,144) umfassen, die um eine nach oben gerichtete Achse dreht, wobei die Welle (143, 144) drehbar im Schaft (141, 142) geführt ist und überdies unverschiebbar mit jenem derart verbunden ist, dass der Mähbalkenteil (118, 119) mit dem Schaft (141, 142) mittels der Welle (143, 144) verbunden ist.

39. Mähmaschine nach mindestens einem der Ansprüche 35,37 oder 38, dadurch gekennzeichnet, dass die Verbindungsmittel (154,155) ebenfalls auf mindestens einem der Rohrträger (148, 149) vorgesehen sind.

40. Mähmaschine nach mindestens einem der Ansprüche 35,37,38 oder 39, dadurch gekennzeichnet, dass das Winkelgetriebegehäuse (145, 146) mindestens eines Mähbalkenteils (118, 119) eine Ausgangswelle (174, 175) umfasst und dass innerhalb des entsprechenden Rohrträgers (148, 149) eine Kraftübertragungswelle (176, 177) drehbar geführt ist, die an seinem Ende nahe dem Winkelgetriebegehäuse (145, 146) an die Ausgangswelle (174, 175) desselben gekuppelt ist und an seinem anderen Ende aus dem äusseren Ende (178, 179) des Rohrträgers (148, 149) austritt.

41. Mähmaschine nach mindestens einem der Ansprüche 1 bis 40, dadurch gekennzeichnet, dass die Gruppe von Arbeitsorganen (19) hinter den Schneidorganen (20, 20′, 20˝) noch Behandlungsorgane (21) für das von den Schneidorganen (20, 20′, 20˝) geschnittene Gut umfasst.

42. Mähmaschine nach den Ansprüchen 40 und 41, dadurch gekennzeichnet, dass die Behandlungsorgane (21) durch die Kraftübertragungswelle(n) (176, 177) angetrieben werden.

43. Mähmaschine nach Anspruch 42, dadurch gekennzeichnet, dass in jedem Rohrträger (148, 149) eine Kraftübertragungswelle (176, 177) geführt ist, dass an jedem Mähbalkenteil (118, 119) ein Teil (150, 151) der Behandlungsorgane (21) angeschlossen ist und dass jeder Teil (150, 151) der Behandlungsorgane (21) durch die entsprechende Kraftübertragungswelle (176, 177) angetrieben ist.

44. Mähmaschine nach Anspruch 43 in Kombination mit mindestens einem der Ansprüche 27 oder 28, dadurch gekennzeichnet, dass die Kraftübertragungswelle (41) sich zwischen den zwei Teilen (150, 151) der Behandlungsorgane (21) erstreckt.

45. Mähmaschine nach mindestens einem der Ansprüche 41 bis 44, dadurch gekennzeichnet, dass die Behandlungsorgane (21) Konditionierorgane für das von den Schneidorganen (20, 20′, 20˝) geschnittene Gut sind.

## Claims

1. A mower (1) having a group of working elements (19) extending, during work, transversely to the direction of advance (12) during work, comprising a carrying structure (116) to which is connected a cutter bar (117) made in two cutter bar parts (118, 119) rigidly connected together and each equipped with cutter members (20, 20′, 20˝) and drive members (122, 123) extending, at least partially, under the said cutter members (20, 20′, 20˝), the said carrying structure (116) having at least one central carrying element (133, 134) connected to the cutter bar (117), the said group of working elements (19) having, in addition, drive means (40) which extend in particular above the adjacent ends (124, 125) of the two cutter bar parts (118, 119) and which receive the movement from a power source (23) through transmission means (24, 8, 25, 26, 27, 32, 31, 36, 33, 35, 34, 41), the said drive means (40) comprising two drive elements (145, 158, 159, 160, 146, 161, 162, 163) each having an angled transmission (159, 160, 162, 163), the first drive element (145, 158, 159, 160) being coupled to the drive members (122) of the first cutter bar part (118) and the second drive element (146, 161, 162, 163) being coupled to the drive members (123) of the second cutter bar part (119), the said group of working elements (19) being equipped, in addition, with connection means (152, 153, 154, 155) by means of which it is connected to a structure (4, 14, 22) intended to be hitched to a motor vehicle (2), characterised in that:
a) the carrying structure (116) has two central carrying elements (133, 134) of which the first (133) is connected to the first cutter bar part (118) and of which the second (134) is connected to the second cutter bar part (119);
b) the first drive element (145, 158, 159, 160) extends above the inner end (124) of the first cutter bar part (118) where it is coupled to the drive members (122) of this first cutter bar part (118), and the second drive element (146, 161, 162, 163) extends above the inner end (125) of the second cutter bar part (119) where it is coupled to the drive members (123) of this second cutter bar part (119);
c) each central carrying element (133, 134) is rigidly connected to the angled gearbox (145, 146) of the corresponding drive element (145, 158, 159, 160, 146, 161, 162, 163);
d) the two central carrying elements (133, 134) are directly and/or indirectly connected rigidly together; and
e) one part of the said connection means (152, 153) is provided on the rigid direct and/or indirect connection between the two central carrying elements (133, 134).

2. A mower in accordance with claim 1, characterised in that the two cutter bar parts (118, 119) are, at their adjacent ends (124, 125), each surmounted by a rotor (126, 127) turning about an upwardly directed axis.

3. A mower in accordance with claim 2, characterised in that the first central carrying element (133) penetrates into the corresponding rotor (126) of the first cutter bar part (118) passing through the upper part of the said rotor (126) and in that the second central carrying element (134) penetrates into the corresponding rotor (127) of the second cutter bar part (119) passing through the upper part of the said rotor (127).

4. A mower in accordance with one at least of claims 1 to 3, characterised in that each central carrying element (133, 134) is connected in a removable manner to the corresponding angled gearbox (145, 146).

5. A mower in accordance with one at least of claims 1 to 4, characterised in that the two cutter bar parts (118, 119) are, in addition, directly coupled together by means of a coupling element (132) extending, in part at least, under the cutting plane of the cutter members (20, 20′, 20˝).

6. A mower in accordance with claim 5, characterised in that the coupling element (132) couples the two cutter bar parts (118, 119) rigidly together.

7. A mower in accordance with one at least of claims 1 to 6, characterised in that the two central carrying elements (133, 134) are directly connected together by means of a crosspiece (50).

8. A mower in accordance with claim 7, characterised in that connection means (152) are provided on the crosspiece (50).

9. A mower in accordance with one at least of claims 1 to 8, characterised in that the angled gearboxes (145, 146) are rigidly connected together.

10. A mower in accordance with claim 9, characterised in that connection means (153) are provided on the angled gearboxes (145, 146) rigidly connected together.

11. A mower in accordance with one at least of claims 1 to 10, characterised in that each central carrying element (133, 134) has in particular a barrel (137, 138), while the drive members (122, 123) of the corresponding cutter bar part (118, 119) have a drive shaft (139, 140) turning about an upwardly directed axis and driven in rotation by the corresponding angled transmission (159, 160, 162, 163), the said drive shaft (139, 140) being guided in rotation in the said barrel (137, 138) and, moreover, connected in translation to the latter, in such a way that the said cutter bar part (118, 119) is connected to the said barrel (137, 138) by means of the said drive shaft (139, 140).

12. A mower in accordance with claim 11, taken in combination with claims 7 and 2 or 8 and 2, characterised in that the crosspiece (59) rigidly connects the two barrels (137, 138) together above the two corresponding rotors (126, 127).

13. A mower in accordance with one at least of claims 1 to 12, characterised in that each angled gearbox (145, 146) has an input shaft (158, 161) extending in an at least approximately horizontal plane, the said input shafts (158, 161) being directed at least approximately one towards the other, and in that the drive means have, in addition, an angled distribution gearbox (147) extending at least partially between the two angled gearboxes (145, 146) and transmitting the movement to the input shafts (158, 161) of the said angled gearboxes (145, 146).

14. A mower in accordance with claim 13 taken in combination with claim 9 or 10, characterised in that the angled gearboxes (145, 146) are rigidly connected together by means of the angled distribution gearbox (147).

15. A mower in accordance with claim 14, characterised in that the angled gearboxes (145, 146) and the angled distribution gearbox (147) form a single input gearbox (40) made in a single piece.

16. A mower in accordance with one at least of claims 13 to 15, characterised in that the input shaft (39) of the angled distribution gearbox (147) is directed, taking account of the direction of advance (12) during work, towards the rear.

17. A mower in accordance with one at least of claims 1 to 16, characterised in that the structure (4, 14, 22) to which the group of working elements (19) is connected, has a frame (14) and a suspension device (22) connected in particular to the connection means (152, 153) of the group of working elements (19) and intended to suspend the group of working elements (19) in the said frame (14) in such a way that the said group of working elements (19) may be displaced, particularly in height, in relation to the said frame (14).

18. A mower in accordance with one at least of claims 1 to 17, characterised in that the structure (4, 14, 22) to which the group of working elements (19) is connected, has a frame (14) resting on the ground (109) by means of wheels (15), and a drawbar (4) connected to the said frame (14) by means of a connection pivot (9) with an upwardly directed axis (10).

19. A mower in accordance with claim 18, characterised in that the said connection pivot (9) is arranged at least approximately in the middle part of the said frame (14) considered transversely to the direction of advance (12) during work.

20. A mower in accordance with claim 18 or 19, characterised in that the said connection pivot (9) is made from a hub (37) provided at the rear end of the drawbar (4).

21. A mower in accordance with claim 20, characterised in that the hub (37) is guided in rotation in a bearing (38) solidly attached to the frame (14).

22. A mower in accordance with one at least of claims 18 to 21, characterised in that the transmission means have in particular an intermediary housing (28) having one part (29) connected to the drawbar (4) and whose output shaft (31) has an axis of rotation at least approximately aligned with the axis (10) of the connection pivot (9).

23. A mower in accordance with claim 22, characterised in that the said intermediary housing (28) has another part (30) connected to the frame (14), the said parts (29, 30) being able to turn in relation to each other about the axis (10) of the connection pivot (9).

24. A mower in accordance with claim 23, characterised in that the second part (30) has an input shaft (33) whose axis of rotation is at least approximately aligned with the axis (10) of the connection pivot (9), and in that the output shaft (31) of the first part (29) and the input shaft (33) of the second part (30) are coupled together by means of a coupling (36).

25. A mower in accordance with claim 24, characterised in that the said coupling (36) is constituted by a universal joint.

26. A mower in accordance with one at least of claims 23 to 25, characterised in that the first part (29) connected to the drawbar (4), extends above the second part (30) connected to the frame (14).

27. A mower in accordance with one at least of claims 23 to 26 as dependant on claim 17, taken in combination with one at least of claims 13 to 16, characterised in that the transmission means have, in addition, a telescopic transmission shaft with universal joints (41) transmitting the movement from the output shaft (34) of the second part (30) of the intermediary housing (28) to the input shaft (39) of the angled distribution gearbox (147).

28. A mower in accordance with claim 27, characterised in that when seen from above, the said transmission shaft (41) extends at least approximately along the direction of advance (12) during work.

29. A mower in accordance with claim 27 or 28, characterised in that the output shaft (34) of the second part (30) of the intermediary housing (28) extends, taking account of the direction of advance (12) during work, behind the input shaft (39) of the angled distribution gearbox (147).

30. A mower in accordance with one at least of claims 27 to 29, characterised in that the output shaft (34) of the second part (30) of the intermediary housing (28) and the input shaft (39) of the angled distribution gearbox (147) are at least approximately parallel to the direction of advance (12) during work.

31. A mower in accordance with one at least of claims 27 to 30, characterised in that during normal work, the input shaft (39) of the angled distribution gearbox (147) and the output shaft (34) of the second part (30) of the intermediary housing (28) extend at least approximately at the same height in relation to the ground (109).

32. A mower in accordance with one at least of claims 1 to 31, characterised in that the two cutter bar parts (118, 119) form between them, when seen from above, an obtuse angle less than 180° and open towards the rear.

33. A mower in accordance with claim 32 taken in combination with one at least of claims 13 to 16, characterised in that the angled distribution gearbox (147) has a bevel gear (157) transmitting the movement directly to the input shaft (158) of one (145) of the angled gearboxes (145, 146), and in that the input shafts (158, 161) of the two angled gearboxes (145, 146) are coupled by means of a coupling (164).

34. A mower in accordance with claim 33, characterised in that the coupling (164) has two universal joints (165, 166) extending at least approximately symmetrically on either side of a vertical plane directed along the direction of advance (12) during work and passing by the tip (167) of the obtuse angle formed by the two input shafts (158, 161), that is to say the two cutter bar parts (118, 119).

35. A mower in accordance with one at least of claims 1 to 34, characterised in that the carrying structure (116) has, in addition, for each cutter bar part (118, 119), on the one hand an outer carrying element (135, 136) connected to the corresponding cutter bar part (118, 119) in the vicinity of the outer end (128, 129) of the latter, and, on the other hand, a carrying tube (148, 149) rigidly connected at one of its ends to the corresponding angled gearbox (145, 146) and connected, close to its other end, to the said outer carrying element (135, 136).

36. A mower in accordance with one at least of claims 1 to 35, characterised in that each cutter bar part (118, 119) is, at its outer end (128, 129), surmounted by a rotor (130, 131) turning about an upwardly directed axis.

37. A mower in accordance with claims 35 and 36, characterised in that each outer carrying element (135, 136) penetrates into the corresponding outer rotor (130, 131) passing through the upper part of the latter.

38. A mower in accordance with claim 35 or 37, characterised in that each outer carrying element (135, 136) has in particular a barrel (141, 142), while the drive members (122, 123) of the corresponding cutter bar part (118, 119) have a shaft (143, 144) turning about an upwardly directed axis with a view particularly to drive in rotation the corresponding outer rotor (130, 131), the said shaft (143, 144) being guided in rotation in the said barrel (141, 142) and, moreover, connected in translation to the latter, in such a way that the said cutter bar part (118, 119) is connected to the said barrel (141, 142) by means of the said shaft (143, 144).

39. A mower in accordance with one at least of claims 35, 37 or 38, characterised in that the connection means (154, 155) are also provided on one at least of the carrying tubes (148, 149).

40. A mower in accordance with one at least of claims 35, 37, 38 or 39, characterised in that the angled gearbox (145, 146) of at least one cutter bar part (118, 119) has an ouput shaft (174, 175) and in that inside the corresponding carrying tube (148, 149) is guided in rotation a transmission shaft (176, 177) coupled, at its end nearest the angled gearbox (145, 146), to the output shaft (174, 175) of the latter and exiting, at its other end, from the outer end (178, 179) of the said carrying tube (148, 149).

41. A mower in accordance with one at least of claims 1 to 40, characterised in that the group of working elements (19) has, in addition, behind the cutter members (20, 20′, 20˝), elements (21) for treating the products cut by the said cutter members (20, 20′, 20˝).

42. A mower in accordance with claims 40 and 41, characterised in that the said treatment elements (21) are driven by the said transmission shaft(s) (176, 177).

43. A mower in accordance with claim 42, characterised in that in each carrying tube (148, 149) is guided a transmission shaft (176, 177), in that each cutter bar part (118, 119) is combined with one part (150, 151) of treatment elements (21) and in that each part (150, 151) of treatment elements (21) is driven by the corresponding transmission shaft (176, 177).

44. A mower in accordance with claim 43 taken in combination with one at least of claims 27 to 28, characterised in that the said transmission shaft (41) extends between the two parts (150, 151) of treatment elements (21).

45. A mower in accordance with one at least of claims 41 to 44, characterised in that the said treatment elements (21) are elements for conditioning the product cut by the cutter members (20, 20′, 20˝).
